(19) Europäisches Patentamt
European Patent Office
Office européen des brevets

(11) EP 1 320 140 A1

(12) EUROPEAN PATENT APPLICATION
published in accordance with Art. 158(3) EPC

(43) Date of publication:
**18.06.2003 Bulletin 2003/25**

(21) Application number: **01956853.4**

(22) Date of filing: **10.08.2001**

(51) Int Cl.[7]: **H01M 4/86**, H01M 8/02, H01M 8/10

(86) International application number:
**PCT/JP01/06952**

(87) International publication number:
**WO 02/015303 (21.02.2002 Gazette 2002/08)**

(84) Designated Contracting States:
**AT BE CH CY DE DK ES FI FR GB GR IE IT LI LU MC NL PT SE TR**

(30) Priority: **16.08.2000 JP 2000246885**
**18.08.2000 JP 2000248365**
**13.09.2000 JP 2000277776**
**29.09.2000 JP 2000300056**

(71) Applicant: **MATSUSHITA ELECTRIC INDUSTRIAL CO., LTD.**
**Kadoma-shi, Osaka 571-8501 (JP)**

(72) Inventors:
- **UCHIDA, Makoto**
  **Hirakata-shi, Osaka 573-1145 (JP)**
- **YASUMOTO, Eiichi**
  **Seikacho, Soraku-gun, Kyoto 619-0238 (JP)**
- **YOSHIDA, Akihiko**
  **Hirakata-shi, Osaka 573-0165 (JP)**
- **SUGAWARA, Yasushi**
  **Higashiosaka-shi, Osaka 577-0056 (JP)**
- **SAKAI, Osamu**
  **Neyagawa-shi, Osaka 572-0055 (JP)**
- **HATOH, Kazuhito**
  **Osaka-shi, Osaka 536-0015 (JP)**
- **NIIKURA, Junji**
  **Hirakata-shi, Osaka 573-0157 (JP)**
- **HOSAKA, Masato**
  **Osaka-shi, Osaka 530-0043 (JP)**
- **KANBARA, Teruhisa**
  **Toyonaka-shi, Osaka 560-0056 (JP)**
- **YONAMINE, Takeshi**
  **Suita-shi, Osaka 565-0842 (JP)**
- **TAKEBE, Yasuo**
  **Uji-shi, Kyoto 611-0002 (JP)**
- **HORI, Yoshihiro**
  **Ikoma-shi, Nara 630-0141 (JP)**
- **GYOTEN, Hisaaki**
  **Shijonawate-shi, Osaka 575-0013 (JP)**
- **KUSAKABE, Hiroki**
  **Sakai-shi, Osaka 590-0113 (JP)**

(74) Representative: **Bradley, Josephine Mary et al**
**D. Young & Co.,**
**21 New Fetter Lane**
**London EC4A 1DA (GB)**

# (54) FUEL CELL

(57) To improve the performance of a catalyst layer for a fuel cell, the weight ratio of a hydrogen ion conductive polymer electrolyte and electroconductive carbon particles in a catalyst layer is controlled to satisfy the formula (1): $Y=a \cdot \log X-b+c$ where, log represents natural logarithm, X represents the specific surface area of the electroconductive carbon particles ($m^2/g$), Y=(the weight (g) of the hydrogen ion conductive polymer electrolyte)/(the weight (g) of the electroconductive carbon particles), a=0.216, c=±0.300, b=0.421 at an air electrode and b=0.221 at an fuel electrode.

F I G. 1

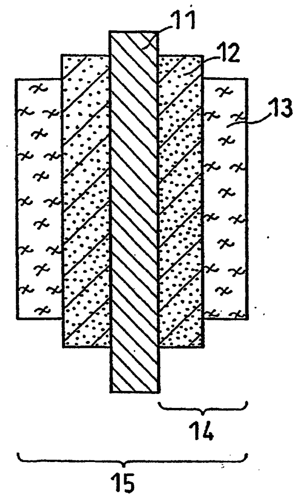


EP 1 320 140 A1

## Description

Technical Field

The present invention relates to a fuel cell. More particularly, the present invention relates to a catalyst layer in an electrode which is a constituent element of a fuel cell.

Background Art

Fuel cells using polymer electrolytes generate electric power and heat simultaneously by electrochemically reacting a fuel gas containing hydrogen with an oxidant gas containing oxygen such air and the like.

Fig. 1 shows a schematic sectional view of an electrode membrane assembly (MEA) constituting a polymer electrolyte type fuel cell. As shown in Fig. 1, a catalyst layer 12 is formed on both surfaces of a polymer electrolyte membrane 11 transporting a hydrogen ion selectively. This catalyst layer 12 is formed of a mixture obtained by mixing a carbon powder carrying a platinum-type metal catalyst with a hydrogen ion conductive polymer electrolyte. Next, on the outside of this catalyst layer 12, a gas diffusion layer 13 having fuel gas permeability and electron conductivity is formed. As this gas diffusion layer 13, for example, water-repellent treatment-performed carbon paper is used. This catalyst layer 12 and the gas diffusion layer 13 constitute an electrode 14.

For prevention of leakage of a fuel gas and an oxidant gas out of a fuel cell and prevention of mutual mixing of these gases, sealing materials are placed such as gaskets sandwiching a polymer electrolyte membrane, around the electrode 14. This sealing material is previously integrated with the electrode 14 and the polymer electrolyte membrane 11. Thus, the electrode 14 and the polymer electrolyte membrane 11 constitute MEA 15.

Now, as the polymer electrolyte membrane 11, perfluorocarbonsulfonic acid having a structure represented by the formula (2):

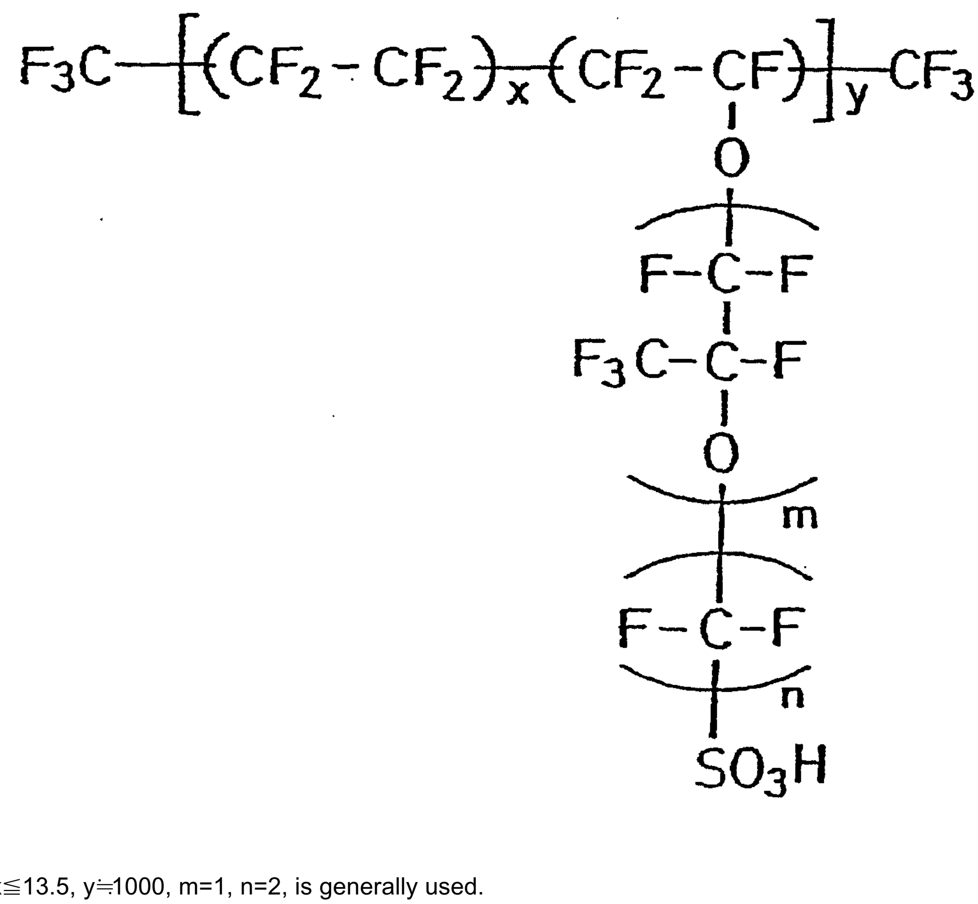

where $5 \leqq x \leqq 13.5$, $y \fallingdotseq 1000$, $m=1$, $n=2$, is generally used.

Fig. 2 shows a schematic sectional view of a unit cell using MEA 15 shown in Fig. 1. As shown in Fig. 2, on the outside of MEA 15, electroconductive separator plates 21 are placed for fixing this mechanically. In parts of the separator plates 21 in contact with MEA formed are gas passages 22 for feeding a gas to the electrode 14 and removing

out a produced gas and excess gases. Though the gas passages 22 can be placed also as separate members on the separator plate 21, but it is general to form grooves on the surface of the separator 21, to form gas passages 22.

Thus, by fixing MEA 15 by a pair of separator plates 21, a unit cell 23 is obtained. An electromotive force of about 0.8 V can be generated by feeding a fuel gas to one gas passage 22 and feeding an oxidant gas to another gas passage 22.

However, when a fuel cell is used as an electric source, voltages from several volts to several hundreds of volts are usually necessary. Therefore, actually, necessary number of unit cells 23 are used connected in series to be used. In this case, gas passages 22 are formd on rear and front, both surfaces of the separator plate 21, and separator plates and MEAs are repeatedly laminated in the order of separator plate/MEA/separator plate/MEA, and unit cells 23 are connected in series.

For feeding a gas such as a fuel gas or an oxidant gas to the gas passage 22, it is necessary that piping for feeding a gas is branched into the number corresponding to the number of separator plates 21 to be used, and ends of the branched piping are allowed to communicate directly with the gas passages 22 of the separator plate 21. This jig is called a manifold, and a manifold communicating gas feeding piping directly with a separator plate is called an outer manifold. On the other hand, manifolds include an inner manifold having a simpler structure. In the case of the inner manifold, a penetration aperture is provided in a separator plate having gas passages formed, and the outlet and the inlet of the gas passage are connected to this aperture, and a gas is directly fed into this aperture.

Since a fuel cell generates heat in operation, it is necessary to cool the fuel cell by passing cooling water and the like, for maintaining the fuel cell at good temperature condition. Usually, a cooling part through which cooling water is passed is inserted between separator plates, every one to three unit cells. The cooling part may have the same structure as that of the separator plate. Actually, a passage for cooling water is provided on the rear surface of the above-mentioned separator plate (surface not contacting with a gas diffusion layer) to form a cooling part in many cases.

A plan view schematically showing the structure of the surface of the above-mentioned separator plate 21 is shown in Fig. 3, and a plan view schematically showing the structure of the rear surface of the separator plate is shown in Fig. 4. As shown in Fig. 3, a passage for a fuel gas or an oxidant gas is formed on the surface of the separator plate 21, and as shown in Fig. 4, a passage for circulating cooling water is formed on the rear surface of the separator plate 21.

In Fig. 3, a fuel gas is charged from an aperture 31a, and discharged from an aperture 31b. On the other hand, an oxidant gas is injected from an aperture 32a, and discharged from an aperture 32b. Cooling water is injected from an aperture 33a, and cooling water is discharged from an aperture 33b. A fuel gas injected from an aperture 31a is introduced to an aperture 31b through a convex part 34 constituting a gas passage, meandering on the way. A convex part 35 constitutes a gas passage together with the concave part 34. Then, a fuel gas, oxidant gas and cooling water are sealed with a sealing material 36.

The separator plate used in such a polymer electrolyte type fuel cell should have high electric conductivity and gas tightness against a fuel gas, further, should have a high corrosion resistance against an oxidation-reduction reaction between hydrogen and oxygen, namely, an acid resistance.

Therefore, conventional separators are produced by forming a gas passage by performing cutting process on the surface of a plate made of glassy carbon, or filling a press molding die on which a gas passage has been formed with a mixture of a binder and an expanded graphite powder, performing pressing process, then, effecting sintering by heating, and the like.

Recently, there are trials of using a metal plate such as a stainless steel plate and the like as the material of a separator plate, instead of carbon materials conventionally used. However, a separator plate composed of a metal plate is exposed to an oxidizing atmosphere at high temperature, therefore, when used for a long period of time, this plate is corroded or dissolved. Additionally, there is a problem that, when a metal plate is corroded, the electric resistance at the corroded portion increases and the output of a cell decreases.

Further, when a metal plate is dissolved, dissolved metal ions diffuse in a polymer electrolyte and trapped at an ion exchange site in the polymer electrolyte, leading to decrease in ion conductivity of the polymer electrolyte itself resultantly. Namely, the polymer electrolyte itself deteriorates. For avoiding such a deterioration, it is general to plate the surface of a metal plate with gold having a certain thickness. Further, it has also been investigated to produce a separator plate with a electroconductive resin composition obtained by mixing an epoxy resin and a metal powder.

MEA, separator plate and cooling part as described above are laminated alternately to obtain a laminate composed of 10 to 200 unit cells laminated, and this laminate is sandwiched with end plates via a collecting plate and an insulating plate. Then, the end plates, collecting plates, insulating plates and laminate are fixed by a fastening volt, to obtain a fuel cell stack.

Fig. 5 is a schematic perspective view of the fuel cell stack referred to here. In the fuel cell stack shown in Fig. 5, a necessary number of unit cells 41 are laminated to constitute a laminate, and the laminate is sandwiched between two end plates 42 and fastened with a plurality of fastening volts 43. In Fig. 5, the collecting plate and the insulating plate are abbreviated. Here, on the end plate 42, an aperture 44a for charging an oxidant gas, an aperture 45a for charging a fuel gas and an aperture 46a for charging cooling water are provided. On the other hand, an aperture

44b for discharging an oxidant gas, an aperture 45b for discharging a fuel gas and an aperture 46b for discharging cooling water are also provided.

In the electrode of the polymer electrolyte fuel cell as described above, the size of the area of so-called three-phase interface formed of a fine pore serving as a feeding passage for a reaction gas, a hydrogen ion conductive polymer electrolyte, and a catalyst material which is an electron conductor affects the discharging ability of the cell. Conventionally, for increasing the area of this three-phase interface and decreasing the use amount of a noble metal which is a catalyst material, trials have been effected for mixing a hydrogen ion conductive polymer electrolyte with the catalyst material and dispersing it. For example, Japanese Patent Publication Nos. 62-61118 and 62-61119 have suggested a method in which a mixture of a dispersion or solution of a polymer electrolyte with a catalyst material is applied on a polymer electrolyte membrane, this polymer electrolyte membrane and an electrode material are together hot-pressed and, then, the catalyst material is reduced.

In Japanese Patent Publication No. 2-48632 has suggested a method in which a dispersion or solution of an ion exchange membrane resin is sprayed on a porous electrode obtained by molding, and this electrode and ion exchange membrane are hot-pressed. Further, Japanese Laid-Open Patent Publication No. 3-184266 has suggested a method in which a powder prepared by coating the surface of a polymer resin with a polymer electrolyte is mixed in an electrode, and Japanese Laid-Open Patent Publication No. 3-295172 has suggested a method in which a powder of a polymer electrolyte is mixed in an electrode.

Japanese Laid-Open Patent Publication No. 5-36418 has suggested a method in which a polymer electrolyte, a catalyst, a carbon powder and a fluorocarbon resin are mixed, the obtained mixture is molded in the form of membrane to obtain an electrode. US Patent No. 5211984 has suggested a method in which a polymer electrolyte, a catalyst and a carbon powder are dispersed in the form of ink into a solvent glycerin or tetrabutylammonium salt, to prepare a dispersion, a membrane made of the obtained dispersion is molded on a polytetrafluoroethylene (PTFE) film, then, the obtained membrane is transferred onto the surface of a solid polymer electrolyte membrane. Further reported are a method in which an exchange group of a solid polymer electrolyte membrane is substituted by Na type, the above-mentioned dispersion in the form of ink is applied on the surface of the membrane and heated to dry at a temperature of 125°C or higher, and the above-mentioned exchange group is substituted again by H type, and other methods.

However, if a hydrogen ion conductive polymer electrolyte is present excessively in a catalyst layer, electron conductivity in an electrode is remarkably decreased and simultaneously, a fine pore serving as a feeding passage for a reaction gas is clogged, decreasing power generation property. On the other hand, when a hydrogen ion conductive polymer electrolyte is deficient, hydrogen ion conductivity lowers, and a power generation property decreases, problematically. Thus, in a catalyst layer composed of a hydrogen ion conductive polymer electrolyte and a carbon powder carrying a catalyst noble metal, an influence exerted on a power generation property by the mixing ratio of a catalyst material and a polymer electrolyte is not apparent yet.

Then, an object of the present invention is to clarify a relation between a hydrogen ion conductive polymer electrolyte, catalyst particle and a carbon powder in a catalyst layer of an electrode of a fuel cell, and to provide a fuel cell excellent in a power generation property.

On the other hand, an electrode reaction of a fuel cell is controlled by diffusion, in a relatively higher current density region of current density of 0.1 A/cm$^2$ or more. Namely, gas diffusing rate controls the rate of an electrode reaction. Therefore, for improving the performance of a cell, it is necessary to improve gas diffusing efficiency.

For improvement of the gas diffusing efficiency in a reaction at the air electrode side, oxygen in air, which is an active substance, cannot efficiently fed to the electrode unless a product water is not removed efficiently from the vicinity around the surface of the air electrode. Therefore, particularly at the air electrode side, an idea of electrode structure for enhancing diffusing efficiency was necessary. Usually, therefore, the catalyst layer is made porous as much as possible by mixing a pore forming agent in producing a catalyst layer to obtain the layer through molding and, after the molding, removing the pore forming agent. Specifically, a porosity of 70% or more is secured, usually. However, when increase in the porosity of a catalyst layer and securement of constant catalyst amount per unit electrode area are intended, the following problem occurs. For example, for securing a catalyst amount of about 0.5 mg/cm$^2$, the thickness of a catalyst layer should be increased relatively. Here, when the thickness of a catalyst layer is increased, the utilization efficiency of a catalyst lowers in portions remote far from a polymer electrolyte membrane in a catalyst layer as compared with portions adjacent to a polymer electrolyte membrane. Further, when the thickness of a catalyst layer becomes larger, the cell performance is improved further, however, improvement in the cell performance is gradually saturated. However, sufficient cell performance is not obtained unless the thickness of a catalyst layer is so increased.

When MEA for conventional polymer electrolyte fuel cells is produced, an electrode and a polymer electrolyte membrane are joined by hot press. Further, for fastening a stack formed by laminating unit cells, it is usual to fix this with a fastening pressure of about 10 to 20 kgf/cm$^2$. Anyway, application of high pressure to MEA by hot press and fastening pressure cannot be avoided, therefore, particularly when a diffusion layer is constituted of hard carbon non-woven fabric, a polymer electrolyte membrane is injured or deformed by the diffusion layer. Further, there is a risk of

formation of cracking and pinholes and the like on the polymer electrolyte membrane. When pinholes occur on a polymer electrolyte membrane, hydrogen as a fuel and air as an oxidant are cross-leaked and burnt, leading not only to decrease in the performance of a fuel cell, but also to increase in the size of pinholes produced on the polymer electrolyte membrane by burning heat, and in some cases, to a reverse influence exerted even on a separator plate.

Further, electrical conductivity along the area direction of the whole electrode is insufficient only by the electrical conductivity of a catalyst layer and a water repellent layer, therefore, an electroconductive gas diffusion layer is generally used also as a gas diffusion layer. The gas diffusion layer compensates insufficient electric collection of the catalyst layer and diffuses a gas, and additionally, exhibits an effect of facilitating discharge of excess water generated in the catalyst layer by a cell reaction. Therefore, from the standpoint of gas diffusing efficiency, a thinner gas diffusion layer is believed to be more effective. However, from the standpoint of an effect of discharging excess water, larger surface area of parts holding water of a gas diffusion layer is more effective, therefore, when the thickness of a gas diffusion layer is larger, evaporation of water can be effectively facilitated. Further, when the thickness of a gas diffusion layer is decreased, pressure loss of a feeding gas increases, and when an efficiency of the whole fuel cell power generation system is taken into consideration, auxiliary mobility increases and the system efficiency decreases, problematically.

Then, another object of the present invention is to provide optimum MEA capable of producing a fuel cell having an excellent power generation performance and a fuel cell power generation system having an excellent system efficiency. In this point, the present invention relates to a catalyst layer and a gas diffusion layer particularly constituting MEA, and a water repellent layer which can be formed between them.

Next, the gas diffusion layer and catalyst layer constituting an electrode of a fuel cell as described above will be explained particularly in detail below. The gas diffusion layer has mainly the following three functions. The first function is a function of diffusing a reaction gas such as a fuel gas or oxidant gas so as to uniformly feed the reaction gas from a gas passage formed on a further outer surface of the gas diffusion layer to the catalyst in the catalyst layer. The second function is a function of quickly discharging water produced by a reaction in a catalyst layer, into a gas passage. The third function is a function of conducting electrons necessary for a reaction or generated electrons. Namely, the gas diffusion layer is required to have high reaction gas permeability, water vapor permeability and electron conductivity.

As a conventional general technology, the gas diffusion layer having a porous structure is obtained by using a carbon fine powder having a developed structure, a pore forming agent, and an electroconductive porous substrate such as carbon paper or carbon cloth, for imparting gas permeability to the gas diffusion layer. For imparting water vapor permeability to the gas diffusion layer, water repellent polymers typified by fluorocarbon resins and the like are diffused in the gas diffusion layer. Further, for imparting electron conductivity, the gas diffusion layer is constituted of an electron conductive material such as carbon fiber, metal fiber and carbon fine fiber.

The catalyst layer has mainly the following four functions. The first function is a function of feeding a reaction gas such as a fuel gas or oxidant gas fed from the gas diffusion layer to a reaction site of the catalyst layer. The second function is a function of quickly transferring hydrogen ions necessary for a reaction on the catalyst or produced hydrogen ions, to an electrolyte membrane. Further, the third function is a function of transferring electrons necessary for a reaction or generated electrons. The fourth function is a high catalyst ability for quick reaction and the wide reaction area thereof. Namely, the catalyst layer is required to have high reaction gas permeability, hydrogen ion permeability, electron conductivity and catalyst ability.

As a conventional general technology, the catalyst layer having a porous structure is obtained by using a carbon fine powder having a developed structure and a pore forming agent, for imparting gas permeability to the catalyst layer. Further, for imparting hydrogen ion permeability to the catalyst layer, a polymer electrolyte is dispersed in portions around a catalyst in the catalyst layer, and a hydrogen ion network is formed. For impacting electron conductivity to the catalyst layer, an electron conductive material such as a carbon fine powder or a carbon fiber is used as a catalyst carrier. Further, for improving a catalyst ability, a metal catalyst having high reaction activity typified by platinum is prepared to have a particle size of several nm, this very fine particle is carried on a carbon fine powder, and the obtained catalyst carrying particles are dispersed in the catalyst layer.

Here, the electroconductive carbon particle (carbon fine particle) used in the gas diffusion layer and the catalyst layer of the above-mentioned MEA is explained. The carbon fine powder is a black powder of amorphous carbon having a diameter of 3 to 500 nm, not easily wetted with water, and has a specific gravity of 1.8 to 1.9 and an apparent specific gravity of 0.35 to 0.4 in terms of particle and 0.04 to 0.08 in terms of powder. Though the carbon fine powder can be produced by thermally decomposing hydrocarbons, extremely various products are obtained depending on differences in production methods, production conditions and the like. In any method, a raw material hydrocarbon is carbonized at a high temperature of 800°C or higher for a short period of time such as several milliseconds.

In a crystal structure as a base of a carbon fine powder, crystallites having a disorderly layered structure, which comprises a several layers of aromatic plane molecules having an average size of 10 to 30Å, aggregate complicatedly to constitute spherical particles. These spherical particles further bond to constitute an aggregate (structure)

in the form of chain. The microscopic condition of the surface of this carbon fine powder differs from the condition of a simple fine particle of carbon, and an acidic functional group and other functional group are present on the surface of the particle, therefore, it has special industrial applications such as a rubber reinforcing agent.

The hydrocarbons used for a raw material include natural gas, coal gas, acetylene gas, petroleum-based heavy oil, petroleum, creosote oil, naphthalene, anthracene and the like, and classified into gas black, oil black, acethylene black and the like depending on the raw material.

90% or more of the carbon fine powder are used as various rubber reinforcing agents (about 80% of them are for tires), and widely used for plastic reinforcing fillers, printing inks, paints, electric wires, electric columns and dry batteries, as well as carbon paper, Japanese ink, pigments, pencils, crayons, catalyst carriers, fireworks and thawing agents and the like.

The main method of producing the carbon fine powder is as described below. The currently dominant furnace method was developed in U.S. during The World War II, and gases were used as a raw material at first, however, recently oils are used, and those of high quality are obtained at high yield. A raw material and air are blown into a furnace (burning furnace), the raw material is incompletely burnt continuously under turbulent diffusion, a burnt gas passed through a cooler is collected in a bag filter in the form of bag and is granulated. For example, the furnace temperature is about 1600°C, the burnt products are hydrogen, carbon monoxide, carbon dioxide, water vapor and carbon black (furnace black). Cooling is conducted by spraying water, and first, the primary cooling temperature is controlled at 900°C and the second cooling temperature is controlled at 400°C.

In the thermal method, natural gas as a raw material is fed to a sufficiently heated checker structure (obtained by combining fireproof red bricks with clearance) to cause thermal decomposition, and a cycle mode operation is conducted without using oxygen.

However, since the wetting property of the carbon fine powder used in such a catalyst layer and gas diffusion layer increases with the lapse of time, it is a problem that fine pores serving as a reaction gas feeding passage are clogged in the catalyst layer and the gas diffusion layer, by the produced water and water contained in a reaction gas for moistening. Consequently, a reaction gas is not fed sufficiently, causing decrease in the cell performance.

A reason for increase in wetting property of such a carbon fine powder is believed in that since a conventionally used carbon fine powder is insufficiently graphitized, various functional groups are present on the surface, surface energy for water is high, and contact angle is small and, consequently, moisture absorption proceeds gradually.

Then, still another object of the present invention is to solve the above-mentioned conventional problems, and to provide an electrode for fuel cell exhibiting higher performance by optimizing the water repellency of a carbon fine particle in a catalyst layer and a gas diffusion layer, and a polymer electrolyte type fuel cell and a liquid fuel cell using this electrode.

Disclosure of Invention

The present invention relates to a fuel cell comprising a hydrogen ion conductive polymer electrolyte membrane, a pair of electrodes disposed sandwiching the hydrogen ion conductive polymer electrolyte membrane, and a pair of separator plates having gas passages feeding a fuel gas to and discharging a fuel gas from one of the electrodes and feeding an oxidant gas to and discharging an oxidant gas from another electrode, wherein

the electrode has a gas diffusion layer and a catalyst layer in contact with the hydrogen ion conductive polymer electrolyte membrane,

the catalyst layer comprises a hydrogen ion conductive polymer electrolyte and electroconductive carbon particles carrying catalyst particles, and

the hydrogen ion conductive polymer electrolyte and the electroconductive carbon particles in the catalyst layer satisfy the formula (1):

$$Y=a \cdot \log X-b+c$$

where, log represents natural logarithm, X represents the specific surface area of the electroconductive carbon particles ($m^2/g$), Y=(the weight (g) of the hydrogen ion conductive polymer electrolyte)/(the weight (g) of the electroconductive carbon particles), a=0.216, c=±0.300, b=0.421 at an air electrode and b=0.221 at an fuel electrode.).

It is effective that the catalyst layer contains electroconductive carbon particles having a particle size of the primary particle of 10 nm or more and 150 nm or less, a hydrogen ion conductive polymer electrolyte and platinum, and has a thickness of 3 µm or more and 10 µm or less.

It is effective that the electrode has a water repellent layer between the catalyst layer and the gas diffusion layer, the water repellent layer contains electroconductive carbon particles having a particle size of the primary particle of 10 nm or more and 150 nm or less and a water repellent agent, portions of the water repellent layer not intruding

into the gas diffusion layer have an average thickness of 5 μm or more and 50 μm or less.

It is effective that the average thickness of the gas diffusion layer is 250 μm or more and 400 μm or less.

It is effective that the catalyst layer has a porosity of 30% or more and 70% or less, and the water repellent layer has a porosity of 30% or more and 60% or less.

It is effective that the fuel cell has a sealing material on the peripheral parts of the electrode, and the distance between the electrode and the above-mentioned sealing material is 10 μm or more and 1 mm or less.

It is effective that the hydrogen ion conductive polymer electrolyte has a main chain skeleton comprised of fluorocarbon and a side chain having an end group comprised of sulfonic acid or alkylsulfonic acid, and has an equivalent weight of 80 g/Eq or more and 110 g/Eq or less.

It is effective that the electroconductive carbon particles have a specific surface area of 50 $m^2/g$ or more and 1500 $m^2/g$ or less.

It is effective that the electroconductive carbon particles contain a graphitized carbon powder in an amount of 33% by weight or more.

It is effective that the lattice plane spacing $d_{002}$ of the (002) plane in the crystal structure of the above-mentioned graphitized carbon powder is 3.35Å or more and 3.44Å or less.

It is effective that the graphitized carbon powder is one obtained by thermally treating a carbon powder at 2000°C or more.

It is effective that the electroconductive carbon particles have a specific surface area of 58 $m^2/g$ or more and 1500 $m^2/g$ or less, and the catalyst particles are carried only on the outside of the electroconductive carbon particles.

It is effective that an end cation part composed of a polar functional group present on the outer surface of the electroconductive carbon particle is substituted by a catalyst cation.

It is effective that the catalyst particles have a specific surface area of 50 $m^2/g$ or more and 250 $m^2/g$ or less.

Brief Description of Drawings

Fig. 1 is a schematic sectional view of a membrane electrode assembly (MEA) constituting a polymer electrolyte fuel cell.

Fig. 2 is a schematic sectional view of a unit cell using MEA 15 shown in Fig. 1.

Fig. 3 is a plan view schematically showing the structure of the surface of a separator plate.

Fig. 4 is a plan view schematically showing the structure of the surface of a separator plate.

Fig. 5 is a schematic sectional view of a fuel cell stack.

Fig. 6 is a graph showing the relation between the ratio of polymer electrolyte/electroconductive carbon particles and the output voltage per unit cell in Example 1.

Fig. 7 is a graph showing the relation between the ratio of polymer electrolyte/electroconductive carbon particles and the output voltage per unit cell in Example 2.

Fig. 8 is a graph showing the relation between the ratio of polymer electrolyte/electroconductive carbon particles and the output voltage per unit cell in Example 3.

Fig. 9 is a graph showing the relation between the ratio of polymer electrolyte/electroconductive carbon particles and the output voltage per unit cell in Example 4.

Fig. 10 is a graph showing the relation between the ratio of polymer electrolyte/electroconductive carbon particles and the output voltage per unit cell in Example 5.

Fig. 11 is a graph showing the relation between the ratio of polymer electrolyte/electroconductive carbon particles and the output voltage per unit cell in Example 6.

Fig. 12 is a graph showing the relation between the ratio of polymer electrolyte/electroconductive carbon particles and the output voltage per unit cell in Example 7.

Fig. 13 is a graph showing the relation between the weight ratio of polymer electrolyte/electroconductive carbon particles and the specific surface area of the electroconductive carbon particles, when the output voltage is highest in Figs. 6 to 12.

Fig. 14 is a schematic sectional view conceptually showing the structure of the primary particles of a graphitized carbon powder (a) and a usual carbon powder (b).

Fig. 15 is a view showing the fine crystal structure of carbon black which is a carbon powder usually used conventionally.

Fig. 16 is a graph showing the relation between the operation time of a cell and the voltage per one cell (unit cell) in Experiment Example 2.

Fig. 17 is a graph showing the relation between the operation time of another cell and the voltage per one cell (unit cell) in Experimental Example 2.

Fig 18 is a schematic sectional view schematically showing catalyst carrying particles, which carry catalyst particles only on the outer surface of electroconductive carbon particles.

Fig. 19 is a current-voltage (I-V) curve of a unit cell in Experimental Example 3.

Fig. 20 is a schematic sectional view schematically showing catalyst carrying particles, which carry catalyst particles on the outer surface and the inner surface of electroconductive carbon particles.

Best Mode for Carrying Out the Invention

As described above, the present invention is characterized in that, in an electrode having a gas diffusion layer and a catalyst layer in a fuel cell, the catalyst layer is formed of a hydrogen ion conductive polymer electrolyte and electroconductive carbon particles carrying catalyst particles, and the weight of the hydrogen ion conductive polymer electrolyte and the weight of the electroconductive carbon particles in the catalyst layer are controlled to satisfy the formula (1):

$$Y=a \cdot \log X-b+c$$

where, log represents natural logarithm, X represents the specific surface area of the electroconductive carbon particles ($m^2/g$), Y=(the weight (g) of the hydrogen ion conductive polymer electrolyte)/(the weight (g) of the electroconductive carbon particles), a=0.216, c=±0.300, b=0.421 at an air electrode and b=0.221 at an fuel electrode.

It is effective that the catalyst layer contains electroconductive carbon particles having a particle size of the primary particle of 10 nm or more and 150 nm or less, a hydrogen ion conductive polymer electrolyte and platinum, and has a thickness of 3 μm or more and 10 μm or less.

It is effective that the electrode has a water repellent layer between the catalyst layer and the gas diffusion layer, the water repellent layer contains electroconductive carbon particles having a particle size of the primary particle of 10 nm or more and 150 nm or less and a water repellent agent, portions of the water repellent layer not intruding into the gas diffusion layer have an average thickness of 5 μm or more and 50 μm or less.

It is effective that the average thickness of the gas diffusion layer is 250 μm or more and 400 μm or less.

It is effective that the catalyst layer has a porosity of 30% or more and 70% or less, and the water repellent layer has a porosity of 30% or more and 60% or less.

It is effective that the fuel cell has a sealing material on the peripheral parts of the electrode, and the distance between the electrode and the sealing material is 10 μm or more and 1 mm or less.

It is effective that the hydrogen ion conductive polymer electrolyte has a main chain skeleton comprised of fluorocarbon and a side chain having an end group comprised of sulfonic acid or alkylsulfonic acid, and has an equivalent weight of 80 g/Eq or more and 1100 g/Eq or less. The "equivalent weight" means the weight of the whole electrolyte giving 1 mol of sulfone group.

It is effective that the electroconductive carbon particles have a specific surface area of 50 $m^2/g$ or more and 1500 $m^2/g$ or less.

It is effective that the electroconductive carbon particles contain a graphitized carbon powder in an amount of 33% by weight or more.

It is effective that the lattice plane spacing $d_{002}$ of the (002) plane in the crystal structure of the graphitized carbon powder is 3.35Å or more and 3.44Å or less.

It is effective that the graphitized carbon powder is obtained by thermally treating a carbon powder at 2000°C or more.

It is effective that the electroconductive carbon particles have a specific surface area of 58 $m^2/g$ or more and 1500 $m^2/g$ or less, and the catalyst particles are carried only on the outside of the electroconductive carbon particles.

It is effective that an end cation part composed of a polar functional group present on the outer surface of the above-mentioned electroconductive carbon particle is substituted by a catalyst cation.

It is effective that the catalyst particles have a specific surface area of 50 $m^2/g$ or more and 250 $m^2/g$ or less.

Examples 1 to 7

First, MEA was produced according to the following method. A dispersion of polytetrafluoroethylene (Lubron LDW-40 manufactured by Daikin Industries, Ltd.) was mixed in an amount of 30% by weight by dry weight with an electroconductive carbon particle powder (Denka Black manufactured by Denki Kagaku Kogyo K.K.), to produce a water repellent layer ink. Next, the water repellent layer ink was applied on the surface of carbon paper (manufactured by Toray Industries, Inc.: TGPH060H), and heated at 350°C by a hot air dryer, to form a gas diffusion layer.

Then, platinum particles having an average particle size of about 30Å were carried on electroconductive

carbon particles having a specific surface area of 70 $m^2/g$ (Denka Black manufactured by Denki Kagaku Kogyo K.K.), to obtain catalyst carrying particles. 25% by weight of the catalyst carrying particles were platinum particles. The catalyst carrying particles and a dispersion or solution of a hydrogen ion conductive polymer electrolyte were mixed to obtain a catalyst paste. In this procedure, the catalyst carrying particles and the hydrogen ion conductive polymer electrolyte were mixed so that the weight ratio represented by polymer electrolyte/electroconductive carbon particles was 0.2 to 2.0. As the hydrogen ion conductive polymer electrolyte, a perfluorocarbonsulfonic acid having an equivalent weight of 1000 to 1100 g/Eq was used.

Next, on one surface of the gas diffusion layer and on both surfaces of a hydrogen ion conductive polymer electrolyte membrane (Nafion 112 manufactured by E. I. Du Pont de Nemours and Company, U.S.), the catalyst paste was printed. The gas diffusion layer on the fuel electrode side and the gas diffusion layer on the air electrode side were laminated so that the catalyst paste surfaces faced while mutually sandwiching the hydrogen ion conductive polymer electrolyte membrane at the center, and these were connected by a hot press method. By this, a membrane electrode assembly (MEA) was obtained. A gasket plate made of butyl rubber was connected to the outer peripheral parts of the polymer electrolyte membrane of the MEA, and manifold apertures for passing cooling water, fuel gas and oxidant gas were formed on the gasket plate.

Next, separator plates constituted of a resin impregnated graphite plate with a dimension of 20cm×32cm×1.3mm and having gas passages and cooling water passages of a depth of 0.5 mm were prepared. On one surface of MEA, a separator plate having oxidant gas passages formed was laminated, and on another surface of MEA, a separator plate containing fuel gas passages formed was laminated, to obtain a unit cell. Two of this unit cell were laminated, then, this two cell-laminated cell was sandwiched by the separator plates having cooling passages formed. A plurality of this two unit cell laminate were laminated, to produce a cell stack containing 100 unit cells. Then, at both ends of the cell stack, a collecting plate made of stainless steel, an insulating plate made of an electrically insulating material and an end plate were fixed by a fastening rod. The fastening pressure under this condition was 10 $kgf/cm^2$ per area of the separator plate.

A pure hydrogen gas was fed to the fuel electrode and air was fed to the air electrode, of thus produced polymer electrolyte fuel cell in this example. Under conditions of a cell temperature of 75°C, a fuel gas utilization ($U_f$) of 70% and an air utilization ($U_o$) of 40%, the cell property of the above-mentioned cell stack was evaluated. The fuel gas was passed through hot water of 75°C for humidification, and air was passed through hot water of 50°C for humidification. Fig. 6 shows the output voltage when the current density was 700 $mA/cm^2$. Fig. 6 is a graph showing the relation between the ratio of polymer electrolyte/electroconductive carbon particles and the output voltage per unit cell.

From Fig. 6, it was found that when the specific surface are of electroconductive carbon particles is 70 $m^2/g$ and catalyst carrying particles carry 25 wt% of platinum particles, the weight ratio of polymer electrolyte/electroconductive carbon particles at which the output voltage is most excellent is 0.5 (Example 1).

In Example 1, platinum was carried on electroconductive carbon particles having a specific surface of 70 $m^2/g$, next, electroconductive carbon particles having a specific surface of 250 $m^2/g$ (Vulcan XC manufactured by Cabot) were used. A cell was produced in the same constitution as in Example 1 excepting the above-mentioned electroconductive carbon particle, and tested in the same conditions as in Example 1. The results are shown in Fig. 7.

From Fig. 7, it was found that when the specific surface of electroconductive carbon particles is 250 $m^2/g$ and catalyst carrying particles carry 25 wt% of platinum particles, the weight ratio of polymer electrolyte/electroconductive carbon particles at which the output voltage is most excellent is 0.8 (Example 2).

Next, platinum was carried on electroconductive carbon particle having a specific surface area of 800 $m^2/g$ (Ketjen Black EC manufactured by Lion Corp.). A cell was produced in the same constitution as in Example 1 excepting the above-mentioned electroconductive carbon particle, and tested in the same conditions as in Example 1. The results are shown in Fig. 8.

From Fig. 8, it was found that when the specific surface of electroconductive carbon particles is 800 $m^2/g$ and catalyst carrying particles carry 25 wt% of platinum particles, the weight ratio of polymer electrolyte/electroconductive carbon particles at which the output voltage is most excellent is 0.9 (Example 3).

Next, the above-mentioned platinum particles were carried on electroconductive carbon particle having a specific surface area of 1270 $m^2/g$ (Ketjen Black 600 JD manufactured by Lion Corp.). A cell was produced in the same constitution as in Example 1 excepting the above-mentioned electroconductive carbon particle, and tested in the same conditions as in Example 1. The results are shown in Fig. 9.

From Fig. 9, it was found that when the specific surface of electroconductive carbon particles is 1270 $m^2/g$ and catalyst carrying particles carry 25 wt% of platinum particles, the weight ratio of polymer electrolyte/electroconductive carbon particles at which the output voltage is most excellent is 1.2 (Example 4).

Though 25 wt% of platinum was carried on electroconductive carbon particles having a specific surface area of 800 $m^2/g$ in Example 1, 50 wt% of platinum was carried in this example. Namely, 50 wt% of catalyst carrying particles were platinum particles. A cell was produced in the same constitution as in Example 1 excepting the above-mentioned electroconductive carbon particle, and tested in the same conditions as in Example 1. The results are shown in Fig. 10.

From Fig. 10, it was found that when the specific surface of electroconductive carbon particles is 800 $m^2/g$ and catalyst carrying particles carry 25 wt% of platinum particles, the weight ratio of polymer electrolyte/electroconductive carbon particles at which the output voltage is most excellent is 1.0 (Example 5).

Though a perfluorocarbonsulfonic acid having an equivalent weight of 1000 to 1100 g/Eq was used in preparing the catalyst paste in Example 1, a perfluorocarbonsulfonic acid having an equivalent weight of 900 g/Eq was used in this example. A catalyst past was prepared with this perfluorocarbonsulfonic acid and catalyst carrying particles (containing 50 wt% of platinum particles) obtained by carrying platinum particles on electroconductive carbon particles having a specific surface area of 800 $m^2/g$ (Ketjen Black EC manufactured by Lion Corp.). A cell was produced in the same constitution as in Example 1 excepting the above-mentioned conditions, and tested in the same conditions as in Example 1. The results are shown in Fig. 11.

From Fig. 11, it was found that when the specific surface of electroconductive carbon particles is 800 $m^2/g$ and a hydrogen ion conductive polymer has an equivalent weight of 900 g/Eq, the weight ratio of polymer electrolyte/electroconductive carbon particles at which the output voltage is most excellent is 1.1 (Example 6).

Next, a catalyst paste was prepared using a perfluorocarbonsulfonic acid having an equivalent weight of 800 to 850 g/Eq. A cell was produced in the same constitution as in Example 6 excepting the above-mentioned condition, and tested in the same conditions as in Example 1. The results are shown in Fig. 12.

From Fig. 12, it was found that when the specific surface of electroconductive carbon particles is 800 $m^2/g$ and a polymer has an equivalent weight of 800 to 850 g/Eq, the weight ratio of polymer electrolyte/electroconductive carbon particles at which the output voltage is most excellent is 1.0 (Example 7).

Based on the above-mentioned results, Fig. 13 shows the relation between the weight ratio of polymer electrolyte/electroconductive carbon particles and the specific surface area of electroconductive carbon particles, at which the output voltage is most excellent, in Figs. 6 to 12. A straight line was drawn in Fig. 13 and this line was analyzed, to obtain a formula: $y=0.2164 \cdot \log X-0.421$. When the inclination of the above-mentioned straight line was changed in the permissible range in Fig. 8, a formula (1): $Y=a \cdot \log X-b+c$ where, log represents natural logarithm, X represents the specific surface area of the electroconductive carbon particles, Y=(the weight (g) of the hydrogen ion conductive polymer electrolyte)/(the weight (g) of the electroconductive carbon particles), a=0.216, c=±0.300, b=0.421 at an air electrode and b=0.221 at an fuel electrode, was obtained. Namely, it was found preferable that the hydrogen ion conductive polymer electrolyte, catalyst particles and electroconductive carbon particles in the above-mentioned catalyst layer satisfy the formula (1). Particularly, it was found preferable that b=0.421 at an air electrode and b=0.221 at an fuel electrode.

From Fig. 13, it was found that polymer electrolyte/electroconductive carbon particles at which the output voltage is most excellent is scarcely dependent on the Pt carrying ratio and the equivalent weight of a hydrogen ion conductive polymer electrolyte dispersed in the catalyst. Namely, it was found that the output voltage of a fuel cell can be enhanced by controlling the amount of a hydrogen ion conductive polymer electrolyte introduced in the catalyst layer according to the formula (1) from the specific surface area of electroconductive carbon particles used as a catalyst material. As described above, the output performance of a fuel cell can be enhanced according to the present invention.

Examples 8 to 41

Next, the following examples were conducted to find suitable constitutions of a catalyst layer, water repellent layer, gas diffusion layer and the like.

Electroconductive carbon particles having a particle size of the primary particle of 10 nm or more and 150 nm or less (Vulcan XC manufactured by Cabot) were allowed to carry platinum particles having an average particle size of 30Å to obtain catalyst carrying particles for an air electrode (containing 50 wt% of platinum particles). Further, the carbon black was allowed to carry platinum-ruthenium alloy particles having an average particle size of 30Å to obtain catalyst carrying particles for a fuel electrode (containing 50 wt% of platinum-ruthenium alloy particles). As the hydrogen ion conductive polymer electrolyte, a perfluorosulfonic acid of a chemical formula shown in the formula (2) was used.

20 parts by weight of the catalyst carrying particles and 80 parts by weight of an ethanol dispersion or solution containing 9 wt% of hydrogen ion conductive polymer electrolyte were mixed by ball mill to prepare an electrode ink. In this case, for producing a catalyst layer having a thickness of over 10 μm and having large porosity for comparison, 20 wt% of a pore forming agents was added to the electrode ink to prepare an electrode ink. After production of a catalyst layer containing the pore forming agent, the pore forming agent was removed by thermal treatment.

Then, an ethanol dispersion or solution containing 9 wt% of a hydrogen ion conductive polymer electrolyte was cast on a smooth glass substrate, and dried to obtain a hydrogen ion conductive polymer electrolyte membrane having an average membrane thickness of 30 μm. Then, on both surfaces of this hydrogen ion conductive polymer electrolyte membrane, the electrode ink and the pore forming agent-containing electrode ink were printed by a screen printing method, to obtain a polymer electrolyte membrane with catalyst layer.

Carbon paper was used as the gas diffusion layer, and water repellent treatment was performed on this.

Carbon non-woven fabric (TGP-H-120 manufactured by Toray Industries, Inc.) of 16cm×20cm×360μm was immersed in an aqueous dispersion containing a fluorocarbon resin (Neofron ND1 manufactured by Daikin Industries, Ltd.), then, this was dried, and heated at 400°C for 30 minutes, to give water repellency.

Next, electroconductive carbon particles (carbon black) having a particle size of the primary particle of 10 nm or more and 150 nm or less and an aqueous dispersion of a PTFE powder were mixed, to prepare a water repellent layer ink.

Further, the water repellent layer ink was applied by a screen printing method to form a water repellent layer on one surface of the carbon non-woven fabric which was a gas diffusion layer. In this condition, a part of the water repellent layer was intruded into, namely, buried into the carbon non-woven fabric, and by controlling the viscosity of the water repellent layer ink, the thickness of parts of the water repellent layer not intruded into the diffusion layer was controlled.

Then, on both surfaces of the polymer electrolyte membrane with catalyst layer, a pair of diffusion layers with water repellent layer were bonded by a hot press so that the water repellent layer was in contact with the catalyst layer on the polymer electrolyte membrane, obtaining a membrane/electrode assembly (MEA).

This MEA was thermally treated for 1 hour in a saturated water vapor atmosphere of 120°C, to allow conducting passages to develop sufficiently. Here, it was found that when a hydrogen ion conductive polymer electrolyte of the formula (2) is thermally treated under a wet atmosphere of a relatively high temperature of about 100°C of more, a hydrophilic channel as a hydrogen ion conductive passage is developed, to form a reverse micelle structure.

Thus, an electrode of 16cm×20cm was connected on both surfaces of a hydrogen ion conductive polymer electrolyte membrane of 20 cm×32 cm, to obtain MEA containing electroconductive carbon particles carrying a catalyst for electrode reaction.

Next, a gasket plate made of rubber was connected to the outer peripheral parts of the polymer electrolyte membrane of MEA, and manifold apertures for passing cooling water, fuel gas and oxidant gas were formed.

Then, separator plates constituted of a resin-impregnated graphite plate with a dimension of 20cm×32cm×1.3mm and having gas passages and cooling water passages of a depth of 0.5 mm were prepared. On one surface of MEA, a separator plate having oxidant gas passages formed was laminated, and on another surface of MEA, a separator plate having fuel gas passages formed was laminated, to obtain a unit cell. Two of this unit cell were laminated, then, sandwiched by the separator plates having cooling passages formed, to obtain a laminate composed of two unit cells. A plurality of this laminate were laminated, to produce a cell stack containing 100 unit cells. Then, at both ends of the cell stack, a collecting plate made of stainless steel, an insulating plate made of an electrically insulating material and an end plate were fixed by fastening rods. The fastening pressure under this condition was 10 kgf/$cm^2$ per area of the separator plate.

Thus produced polymer electrolyte fuel cell of this example thus produced was maintained at 80°C, and a hydrogen gas humidified and heated so as to have a due point of 75°C, and having a lowered carbon monoxide concentration of 50 ppm or less by modifying methane with water vapor was fed to one electrode, and air humidified and heated so as to have a due point of 50°C was fed to another electrode.

This cell stack was subjected to a continuous power generation test under conditions of a fuel utilization of 85%, an oxygen utilization of 60% and a current density of 0.7 A/$cm^2$, and change by time of the output property was measured.

Tables 1 and 2 show combinations of the catalyst layer, water repellent layer and diffusion layer and the results of the power generation test.

Table 1

| Catalyst layer | | Water repellent layer | Diffusion layer | Initial properties | | Properties after 5000 hours | |
|---|---|---|---|---|---|---|---|
| Thickness (μm) | Catalyst layer mg/$cm^2$ | Thickness (μm) | Thickness (μm) | Open voltage (V) | Voltage in power generation at 0.7 A/$cm^2$ | Open voltage (V) | Voltage in power generati on at 0.7 A/$cm^2$ |
| 10 | 0.5 | 20 | 350 | 99.5 | 66.5 | 99.0 | 65.0 |
| 10 | 0.2 | 20 | 350 | 98.5 | 65.5 | 98.0 | 64.0 |
| 10 | 0.1 | 20 | 350 | 98.0 | 64.0 | 97.0 | 62.0 |
| 10 | 0.05 | 20 | 350 | 97.0 | 62.0 | 96.0 | 60.0 |

Table 1 (continued)

| Catalyst layer | | Water repellent layer | Diffusion layer | Initial properties | | Properties after 5000 hours | |
|---|---|---|---|---|---|---|---|
| Thickness (µm) | Catalyst layer mg/ $cm^2$ | Thickness (µm) | Thickness (µm) | Open voltage (V) | Voltage in power generation at 0.7 A/$cm^2$ | Open voltage (V) | Voltage in power generati on at 0.7 A/$cm^2$ |
| 7 | 0.5 | 20 | 350 | 100.0 | 67.0 | 99.5 | 66.0 |
| 7 | 0.2 | 20 | 350 | 99.0 | 66.0 | 97.5 | 64.5 |
| 7 | 0.1 | 20 | 350 | 97.5 | 63.0 | 96.0 | 61.5 |
| 7 | 0.05 | 20 | 350 | 96.0 | 62.5 | 95.0 | 60.0 |
| 3 | 0.5 | 20 | 350 | 99.0 | 66.5 | 98.5 | 65.0 |
| 3 | 0.2 | 20 | 350 | 98.0 | 65.0 | 96.5 | 63.0 |
| 3 | 0.1 | 20 | 350 | 97.0 | 62.0 | 96.5 | 60.5 |
| 3 | 0.05 | 20 | 350 | 95.5 | 61.5 | 94.0 | 60.0 |
| 7 | 0.2 | 5 | 350 | 99.5 | 66.5 | 92.5 | 60.5 |
| 7 | 0.2 | 10 | 350 | 99.5 | 66.0 | 94.0 | 61.5 |
| 7 | 0.2 | 30 | 350 | 99.0 | 66.0 | 98.0 | 65.0 |
| 7 | 0.2 | 50 | 350 | 97.5 | 65.5 | 97.0 | 64.4 |
| 7 | 0.2 | 20 | 250 | 99.5 | 65.5 | 99.0 | 65.0 |
| 7 | 0.2 | 20 | 400 | 99.0 | 66.0 | 98.0 | 64.5 |

Table 2

| Catalyst layer | | Water repellent layer | Diffusion layer | Initial properties | | Properties after 5000 hours | |
|---|---|---|---|---|---|---|---|
| Thickness (µm) | Catalyst layer mg/ $cm^2$ | Thickness (µm) | Thickness (µm) | Open voltage (V) | Voltage in power generation at 0.7 A/$cm^2$ | Open voltage (V) | Voltage in power generati on at 0.7 A/$cm^2$ |
| 50 | 1.0 | 20 | 350 | 97.0 | 58.0 | 92.5 | 50.5 |
| 50 | 0.5 | 20 | 350 | 96.0 | 55.0 | 94.0 | 43.0 |
| 20 | 1.0 | 20 | 350 | 98.0 | 60.5 | 97.0 | 53.5 |
| 20 | 0.5 | 20 | 350 | 97.0 | 56.5 | 95.0 | 45.0 |
| 15 | 1.0 | 20 | 350 | 97.5 | 62.0 | 95.0 | 56.0 |
| 15 | 0.5 | 20 | 350 | 96.0 | 60.5 | 93.5 | 57.0 |
| 15 | 0.2 | 20 | 350 | 93.5 | 55.5 | 88.5 | 48.0 |
| 2 | 0.5 | 20 | 350 | 92.0 | 60.5 | 88.0 | 52.5 |
| 2 | 0.2 | 20 | 350 | 90.0 | 56.5 | 86.5 | 50.0 |
| 2 | 0.1 | 20 | 350 | 88.5 | 51.5 | 86.0 | 40.5 |
| 7 | 0.2 | 3 | 350 | 97.5 | 60.5 | 82.5 | 20.5 |
| 7 | 0.2 | 60 | 350 | 92.0 | 55.5 | 90.0 | 47.5 |

Table 2 (continued)

| Catalyst layer | | Water repellent layer | Diffusion layer | Initial properties | | Properties after 5000 hours | |
|---|---|---|---|---|---|---|---|
| Thickness (µm) | Catalyst layer mg/ $cm^2$ | Thickness (µm) | Thickness (µm) | Open voltage (V) | Voltage in power generation at 0.7 A/$cm^2$ | Open voltage (V) | Voltage in power generati on at 0.7 A/$cm^2$ |
| 7 | 0.2 | 20 | 150 | 98.5 | 55.5 | 90.5 | 50.5 |
| 7 | 0.2 | 20 | 200 | 97.5 | 58.0 | 95.5 | 50.5 |
| 7 | 0.2 | 20 | 450 | 99.5 | 47.5 | 99.0 | 40.5 |
| 7 | 0.2 | 20 | 500 | 100.0 | 40.5 | 99.0 | 22.5 |

As apparent from the descriptions of the above-mentioned examples, when an electrode using a catalyst layer, water repellent layer and diffusion layer having a specific constitution is used, a polymer electrolyte fuel cell having higher initial properties and life property can be obtained. Since a catalyst layer can be produced without adding a pore forming material in producing a catalyst layer, cost reduction and abbreviation of processes are possible. Further, by maintaining the porosity of the catalyst layer lower and decreasing the thickness of a catalyst layer, a cell of high performance can be obtained even at a lower humidification temperature.

Namely, it is effective that the thickness of the catalyst layer is 3 µm or more and 10 µm or less, the average thickness of parts of the water repellent layer not intruding into the gas diffusion layer is 5 µm or more and 50 µm or less, and the average thickness of the above-mentioned gas diffusion layer is 250 µm or more and 400 µm or less.

Examples 42 to 45

Next, the electroconductive carbon particle was investigated.

The graphitized carbon fine powder (electroconductive carbon particle) has lower surface energy as compared with water since its surface has a graphite structure, and does not easily absorb moisture since contact angle for water is large. Further, since the number of functional groups on the surface such as -CO, -COOH, -CHO and -OH decreases by thermal treatment at 2000°C or more in the graphitization process, bonding force with water is further suppressed. Therefore, the water repellency of a carbon powder is improved, leading to lower tendency of wetting.

According to such a theory, a phenomenon, in which a carbon fine powder is gradually moistened by water vapor added to a reaction gas for allowing a polymer electrolyte to contain water and by produced water, and dew is generated in fine pores of the catalyst layer and the gas diffusion layer to clog gas passages to lower a gas feeding ability and a produced water discharging ability, is suppressed and high gas permeability and produced water discharging ability can be obtained. As a result, there is obtained an effect that a higher cell performance is manifested for a long period of time and the life property of a fuel cell is improved.

The graphitized carbon powder in the present invention is obtained by graphitizing a carbon powder. As the carbon powder, conventionally known carbon black can be used such as acethylene black, oil furnace black, channel black and thermal black, and powders of various classes can be used. As the commercially available powders, for example, Vulcan XC-72 manufactured by Cabot K.K., Ketjen Black manufactured by Ketjen Black International K.K., N330 manufactured by Showa Denko K.K. and the like are listed.

The particle size of the carbon powder may be 10 to 70 nm, further, preferably from 10 to 40 nm, for increase of the specific surface area carrying a catalyst metal. Therefore, N330, N339, N326, N347, N351, N219, N220, N242, N285, N110, S301, S200 and the like can be used.

Here, Fig. 14 shows a schematic sectional view schematically showing the structures of the primary particles of a graphitized carbon powder (a) and a usual carbon powder (b). Fig. 15 shows a concept view of the crystal structure of natural graphite. Carbon Material Institute magazine, Carbon Material Introduction (tanso zairyo nyumon) p.180, and Jean-Baptiste Donnet, Andries Voer, "Carbon Black" (supervised and translated by Takahashi, Yamashita, Tsutsumi, Kodansha Scientific) pp.78 to 99 describe that the fine crystal structure of carbon black, which is a carbon powder conventionally used in general, is a structure as shown in Fig. 15 according to X-ray diffraction. Namely, it is described that layers connecting hexa-carbon rings (carbon hexagonal net plane) are stacked to constitute a crystallite in the form of lamination structure of 3 to 4 layers in average at a plane spacing of 3.4 to 3.6Å. Further, it is proved, according to various analyses by a high resolution electron microscope, that the inside portion of the particle is based not on fine

crystal but on carbon hexagonal net plane and net planes are stacked tightly in the form of concentric circle near the surface of particle, and more disordered when approximating the center, and the net planes are present surrounding the peripheral parts of portions constituting a core of the particle. The net plane spacings of various carbon blacks measured by electron beam diffraction thereof are about 3.5 to 3.9Å.

Fig. 14 (b) is a view schematically showing the cross section of the primary particle of carbon black, which is a general carbon powder.

On the other hand, the graphitized carbon powder can be obtained by thermally treating the carbon powder at a temperature from 2000 to 3000°C under an inert gas atmosphere such as argon or nitrogen.

By this thermal treatment, the fine particle surface of the primary particle of a carbon powder is carbonized, a carbon hexagonal net plane structure of the surface is grown to form a cross-sectional structure as shown in Fig. 14 (a). Under this condition, the graphitized carbon powder of the present invention has extremely few surface functional groups as compared with the usual carbon powder having a lot of surface functional groups as shown in Fig. 14 (b).

The above-mentioned Jean-Baptiste Donnet, Andries Voer, "Carbon Black" teaches that the boundary value of hard graphitization and easy graphitization of the lattice plane spacing $d_{002}$ of the (002) surface according to X-ray diffraction of a general carbon powder resides at 3.44Å. While a usual carbon powder has a lattice plane spacing $d_{002}$ of over 3.44Å, the graphitized carbon powder has a lattice plane spacing $d_{002}$ of 3.44Å, revealing progressed graphitization. The lower limit of the lattice plane spacing $d_{002}$ may be about 3.35Å.

By the above-mentioned graphitization, a phenomenon, in which a carbon powder is moistened by water vapor added to a reaction gas for allowing a polymer electrolyte to contain water and by produced water, and dew is generated in fine pores of the catalyst layer and the gas diffusion layer to clog gas passages and gas feeding ability and produced water discharging ability lower, is suppressed. Thus, high gas permeability and produced water discharging ability are obtained. As a result, there is obtained an effect that a higher cell performance is manifested for a long period of time and the life property of a fuel cell is improved.

The electrode of the present invention is comprised of a gas diffusion layer and a catalyst layer, and the graphitized carbon powder is contained at least one of these layers. Though various structures and production methods of an electrode are listed, those skilled in the art can select and design around them within a range in which the effect of the present invention is not deteriorated.

For example, a gas diffusion layer is obtained by dispersing a carbon powder in a conductive porous substrate such as carbon paper, in general. The catalyst layer is obtained by applying a paste comprised of a polymer electrolyte and catalyst carrying particles on the gas diffusion layer.

Further, when the electrode according to the present invention is used as a fuel electrode and an air electrode, a polymer electrolyte type fuel cell can be obtained comprising a polymer electrolyte membrane, a fuel electrode and an air electrode sandwiching the polymer electrolyte membrane, an electroconductive separator plate at the fuel electrode side having gas passages through which a fuel gas is fed to the fuel electrode, and an electroconductive separator plate at the air electrode side having gas passages through which an oxidant gas is fed to the air electrode. In this case, as the constituent elements, those conventionally known may be used, and these can be produced by ordinary methods by those skilled in the art.

Then, an example relating to the graphitized carbon powder was conducted as described below.

Acethylene black, which was a carbon powder (Denka Black manufactured by Denki Kagaku Kogyo K.K., particle size: 35 nm) was thermally treated for 60 minutes at 2500°C under an atmosphere of argon gas, then, mixed with an aqueous dispersion of polytetrafluoroethylene (PTFE) (Lubron LDW-40 manufactured by Daikin Industries, Ltd.), to prepare a water repellent ink containing PTFE in an amount of 20 wt% in terms of dry weight. This ink was applied on and impregnated in carbon paper (manufactured by Toray Industries, Inc.: TGPH060H), which was a substrate of a gas diffusion layer, and heated at 300°C by a hot air dryer to form a gas diffusion layer.

On the other hand, 66 parts by weight of catalyst carrying particles carrying 50 wt% of a Pt catalyst on Ketjen Black (Ketjen Black EC manufactured by Ketjen Black International K.K., particle size: 30 nm) and 33 parts by weight of a perfluorocarbonesulfonic acid ionomer (5 wt% Nafion dispersion manufactured by Aldrich U.S.), which was a hydrogen ion conductive material and at the same time a binding agent, were mixed and molded to form a catalyst layer.

The gas diffusion layer and the catalyst layer obtained as described above were bonded to both surfaces of a polymer electrolyte membrane (Nafion 112 membrane manufactured by E. I. Du Pont de Nemours and Company, U.S.), to produce MEA-a having a structure shown in Fig. 1.

Next, acethylene black (Denka Black manufactured by Denki Kagaku Kogyo K.K.) and PTFE aqueous dispersion (Lubron LDW-40 manufactured by Daikin Industries, Ltd.) were mixed to prepare a water repellent ink containing 20 wt% of PTFE in terms of dry weight, and applied on carbon paper (TGPH060H, manufactured by Toray Industries, Inc.) constituting a gas diffusion layer, and thermally treated at 300°C using a hot air drier to form a gas diffusion layer.

On the other hand, Ketjen Black (Ketjen Black EC manufactured by Ketjen Black International K.K.) was thermally treated at 2500°C under an atmosphere of argon gas, then, a Pt catalyst was allowed to be carried on this in an amount of 50 wt%, to obtain catalyst carrying particles. 66 parts by weight of the catalyst carrying particles and

33 parts by weight of a perfluorocarbonesulfonic acid ionomer (5 wt% Nafion dispersion manufactured by Aldrich U. S.), which was a hydrogen ion conductive material and at the same time a binding agent, were mixed and molded to form a catalyst layer.

The gas diffusion layer and the catalyst layer obtained as described above were bonded to both surfaces of a polymer electrolyte membrane (Nafion 112 membrane manufactured by E. I. Du Pont de Nemours and Company, U.S.), to produce MEA-b having a structure shown in Fig. 1.

Next, acethylene black (Denka Black manufactured by Denki Kagaku Kogyo K.K.) was thermally treated for 60 minutes at 2500°C under an atmosphere of argon gas, then, mixed with a polytetrafluoroethylene (PTFE) aqueous dispersion (Lubron LDW-40 manufactured by Daikin Industries, Ltd.) to prepare a water repellent ink containing 20 wt% of PTFE in terms of dry weight. This ink was applied on carbon paper (TGPH060H, manufactured by Toray Industries, Inc.) constituting a substrate of a gas diffusion layer, and thermally treated at 300°C using a hot air drier to form a gas diffusion layer.

On the other hand, Ketjen Black (Ketjen Black EC manufactured by Ketjen Black International K.K.) was thermally treated at 2500°C under an atmosphere of argon gas, then, a Pt catalyst was allowed to be carried on this in an amount of 50 wt%, to obtain catalyst carrying particles. 66 parts by weight of the catalyst carrying particles and 33 parts by weight of a perfluorocarbonesulfonic acid ionomer (5 wt% Nafion dispersion manufactured by Aldrich U. S.), which was a hydrogen ion conductive material and at the same time a binding agent, were mixed and molded to form a catalyst layer.

The gas diffusion layer and the catalyst layer obtained as described above were bonded to both surfaces of a polymer electrolyte membrane (Nafion 112 membrane manufactured by E. I. Du Pont de Nemours and Company, U.S.), to produce MEA-c having a structure shown in Fig. 1.

Next, acethylene black (Denka Black manufactured by Denki Kagaku Kogyo K.K.) and PTFE aqueous dispersion (Lubron LDW-40 manufactured by Daikin Industries, Ltd.) were mixed to prepare a water repellent ink containing 20 wt% of PTFE in terms of dry weight, and applied on carbon paper (TGPH060H, manufactured by Toray Industries, Inc.) constituting a gas diffusion layer, and thermally treated at 300°C using a hot air drier to form a gas diffusion layer.

On the other hand, 66 parts by weight of catalyst carrying particles carrying 50 wt% of a PT catalyst on Ketjen Black (Ketjen Black EC manufactured by Ketjen Black International K.K.) and 33 parts by weight of a perfluorocarbonesulfonic acid ionomer (5 wt% Nafion dispersion manufactured by Aldrich U.S.), which was a hydrogen ion conductive material and at the same time a binding agent, were mixed and molded to form a catalyst layer.

The gas diffusion layer and catalyst layer obtained as described above were bonded to both surfaces of a polymer electrolyte membrane (Nafion 112 membrane manufactured by E. I. Du Pont de Nemours and Company, U. S.), to produce MEA-x having a structure shown in Fig. 1.

Next, a gasket plate made of rubber was connected to the outer peripheral parts of the polymer electrolyte membrane of MEA produced as described above, and manifold apertures for passing cooling water, fuel gas and oxidant gas were formed.

Then, electroconductive separator plates comprised of a graphite plate impregnated with a phenol resin, having an outer dimension of 20cm×32cm×1.3mm and having gas passages and cooling water passages of a depth of 0.5 mm were prepared. Two of these separator plates were used, and the separator plate having oxidant gas passages formed was laminated on one surface of MEA and the separator plate having fuel gas passages formed was laminated on the rear surface of MEA, to obtain a unit cell.

Two of this unit cell were laminated, sandwiched by the separator plates having cooling water passage grooves formed so that the groove was positioned at the MEA side, to obtain a two cell laminate cell, and this pattern was repeated to produce a 100 cell laminate cell (stack). Then, at both ends of the cell stack, a collecting plate made of stainless steel, an insulating plate made of an electrically insulating material and an end plate were disposed and fixed by fastening rods. The fastening pressure under this condition was 15 kgf/cm$^2$ per area of the separator plate.

The fuel cells produced by the above-mentioned methods using MEA-a, MEA-b, MEA-c and MEA-x were called cell A, cell B, cell C and cell X, respectively.

[Evaluation test]

A pure hydrogen gas was fed to the fuel electrode and air was fed to the air electrode, respectively, of four kinds of cells obtained as described above, and a discharge test was conducted under conditions of a cell temperature of 75°C, a fuel gas utilization ($U_f$) of 70% and an air utilization ($U_o$) of 40%. The fuel gas was humidified by passing hot water of 70°C and humidified by passing hot water of 50°C.

Further, into the fuel electrodes of the above-mentioned four kinds of cells, a 2 mol/L methanol aqueous solution was fed at a temperature of 60°C as a typical example of a liquid fuel, and a cell discharge test as a direct type methanol fuel cell was conducted under conditions of a cell temperature of 75°C and an air utilization ($U_o$) of 40%. Also in this case, air was passed through hot water of 50°C, for humidification.

Fig. 16 shows the life property of the above-mentioned cells A, B, C and X as hydrogen-air type fuel cells. Fig. 16 is a graph showing the relation of the operation time of a cell and voltage per cell (unit cell). The average unit cell voltages at a current density of 300 $mA/cm^2$ were 714 mV, 788 mV, 765 mV and 705 mV, respectively, as the initial voltages of the cells A, B, C and X. The properties after 2700 hours were 699 mV, 720 mV, 755 mV and 441 mV, respectively. In contrast to a deteriorated voltage of 264 mV in the cell X, the cells A, B and C showed only decreases of 15 mV, 68 mV and 10 mV, respectively.

Thus, the effect of suppressing decrease in the property was larger in the gas diffusion layer than in the catalyst layer. The cell in which the carbon powders both in the catalyst layer and the gas diffusion layer had been graphitized showed the smallest decrease in voltage. It is a result of suppression of decrease in water repellency of a carbon fine powder in each layer and maintenance of gas diffusion ability and produced water discharging ability for a long period of time. Further, the graphitization effect manifested an effect also in improvement of the initial property. It is a result of increase in the absolute amount of a gas feeding ability.

Fig. 17 shows the life properties of the cells A, B, C and X as liquid fuel cells. Fig. 17 is a graph showing the relation between the operation time of a cell and voltage per cell (unit cell).

The average unit cell voltages at a current density of 200 $mA/cm^2$ were 580 mV, 681 mV, 650 mV and 498 mV, respectively, as the initial voltages of the cells A, B, C and X. The properties after 2700 hours were 555 mV, 580 mV, 631 mV and 0 mV, respectively. In contrast to a deteriorated voltage of 498 mV of the cell X, the cells A, B and C showed only decreases of 25 mV, 101 mV and 19 mV, respectively.

Thus, it was confirmed that the graphitization effect of a carbon powder also manifested in a liquid fuel cell.

Here, Table 3 shows the lattice plane spacing $d_{002}$ of the (002) plane according to X-ray diffraction measurement of a carbon powder, before and after the graphitization, and the moisture absorption amount of a carbon powder after left for 24 hours at a temperature of 25°C and a relative humidity of 70%.

The above-mentioned Acethylene Black and Ketjen Black were used as a carbon powder. As shown in Fig. 3, the lattice plane spacing $d_{002}$ in a crystal structure decreased to 3.44Å or lower by the graphitization treatment, revealing the progress of graphitization. The moisture absorption amount decreases from 0.054% to 0.032% and from 0.097% to 0.060% for Acethylene Black and Ketjen Black, respectively, finding that the condition of a carbon powder was changed by the graphitization treatment such that moisture was hardly absorbed. Therefore, it was found that the wetting property of a catalyst layer and a gas diffusion layer can be suppressed by using a carbon powder after the graphitization treatment.

Table 3

| | Denka Black | | Ketjen Black | |
|---|---|---|---|---|
| | X ray net plane spacing $d_{002}$(Å) | Moisture absorption amount (%) | X ray net plane spacing $d_{002}$(Å) | Moisture absorption amount (%) |
| Before graphitization | 3.48 | 0.054 | >3.50 | 0.097 |
| After graphitization | 3.43 | 0.032 | 3.43 | 0.060 |

In this example, hydrogen and methanol were used as a fuel, however, the same results were obtained even when fuel-modified hydrogen containing impurities such as a carbon dioxide gas, nitrogen and carbon monoxide is used as hydrogen. Further, the same results were obtained even when a fuel liquid such as ethanol or dimethyl ether and a mixture thereof was used instead of methanol. The liquid fuel may be previously evaporated and fed as a vapor.

Furthermore, the structure of the gas diffusion layer of the present invention is not limited by the above-mentioned carbon powder and carbon paper, and an effect was obtained even when other carbon black and carbon cloth such as Vulcan XC-72 and N330 were used.

As described above, according to the present invention, the degree of graphitization of a carbon powder is optimized in a fuel cell and an electrode. Further, a polymer electrolyte fuel cell and liquid fuel cell capable of exhibiting higher performance while maintaining high gas diffusion property and water discharging property for a long period of time by suppressing the water repellency of the catalyst layer and the gas diffusion layer and suppressing their deterioration by time, and an electrode used for them, can be provided.

Examples 46 to 48

Next, catalyst carrying particles in a catalyst layer were further investigated.

For preventing catalyst particles from entering into fine pores of electroconductive carbon particles and for

placing catalyst particles only on the outer surfaces of electroconductive carbon particles, it may be advantageous that polar functional groups are allowed to present only on the outer surfaces, namely on convex parts of electroconductive carbon particles, then, particles of a noble metal are adhered by mutually reacting with the polar functional groups.

For allowing polar functional groups to present only on the outside surfaces of electroconductive carbon particles, electroconductive carbon particles are added into a solution prepared by dissolving or dispersing a compound having a polar functional group, or a solution of an organic acid or an inorganic acid. The viscosity of a solution used in this case is controlled within a range in which the solution does not enter fine pores of electroconductive carbon particles. Specifically, solutions obtained by controlling the viscosity of an oxidant such as nitric acid or hydrogen peroxide, or a silane coupling agent such as 3-aminopropyltriethoxysilane can be used. When an oxidant is used, a polar functional group such as a carboxyl group or hydroxyl group bonds to the surface of electroconductive carbon particles, and when modified with a silane coupling agent, a polar functional group such as an amino group bonds.

When the surface of electroconductive carbon particles is modified in liquid phase, the surface of the above-mentioned electroconductive carbon particles is coated with an inert liquid, then, the electroconductive carbon particles are added into a solution prepared by dissolving or dispersing a compound having a polar functional group and, by this procedure, the outer surface of electroconductive carbon particles can be modified more specifically. As the liquid inert to electroconductive carbon particles, for example, water, alcohol, hydrocarbons, ketones, esters, silicone and the like can be used.

When noble metal particles are thus carried on electroconductive carbon particles having polar functional groups localized on its outer surface, electroconductive carbon particles having noble metal particle localized on its outer surface can be obtained. The reason for this is that, due to mutual interaction of noble metal particles and polar functional groups, the noble metal particles are easily carried on certain portions of the polar functional group.

The electroconductive carbon particles used here can carry noble metal particles at a higher concentration when the specific surface area thereof is larger. The practical specific surface area is 58 $m^2/g$ or more and 1500 $m^2/g$ or less. Noble metal particles show more excellent power generation efficiency at the same amount when the specific surface area is larger. The practical specific surface area is 50 $m^2/g$ or more and 250 $m^2/g$ or less per noble metal weight.

To 100 g of electroconductive carbon particles (Ketjen EC manufactured by Lion Corp., specific surface area: 800 $m^2/g$) was added 1350 ml of water and the mixture was stirred. The specific surface area was calculated according to a BET formula from nitrogen absorption using Sorptomatic 1800 manufactured by Carloelba. 150 ml of nitric acid was added dropwise while heating and stirring in a vessel equipped with a reflux condenser and reflux was continued for 2 hours, then, centrifugal separation and washing with water were repeated. By this, electroconductive carbon particles having -OH group or -COOH group formed only on the surfaces were obtained. Hereinafter, this process is called a modification process.

Next, 13.2 g of a 15.2 wt% aqueous solution of chloroplatinic acid was dissolved in 300 ml of water. To this was added 28.13 g of sodium hydrogen sulfite and the mixture was stirred. Further, 1400 ml of water was added and the mixture was stirred, and 60 ml of a 5% aqueous solution of sodium hydroxide was added to control pH to 5. Then, 240 ml of 30% hydrogen peroxide was added dropwise, further, 150 ml of an aqueous solution of sodium hydroxide was added to maintain pH at 5. To this solution was added a mixture obtained by mixing 2.34 g of electroconductive carbon particles obtained in the above-mentioned modification process and 300 ml of water and stirring them, the obtained mixture was heated while stirring by an ultrasonic homogenizer and boiled for 1 hour, to allow platinum particles to be carried on the surfaces of the electroconductive carbon particles. Then, filtration and washing with water were repeated, the allow the electroconductive carbon particles to carry the catalyst, obtaining catalyst carrying particles.

Fig. 18 shows a schematic sectional view schematically showing catalyst carrying particles, which carry catalyst particles only on the outer surfaces of electroconductive carbon particles. As shown in Fig. 18, an electroconductive carbon particle 111 has fine pores 113, however, catalyst particles 112 are carried only on the outer surface of the electroconductive carbon particle.

The catalyst carrying particles were heated at 800°C in the air to burn the electroconductive carbon particles, and the weight of the residue was measured, to find that the carried amount of platinum was about 50 wt%. The specific surface area of the above-mentioned platinum was measured using an apparatus for adsorbing carbon monoxide (manufactured by Okura Rika K.K.), to find it was 150 $m^2/g$ per platinum weight.

A mixture obtained by mixing 2 g of the catalyst carrying particles obtained in the above-mentioned process, 11 g of a solution containing an ion exchange resin dispersed (Flemion manufactured by Asahi Glass Co., Ltd., 9 wt% ethanol solution) and 5 g of water was applied on the surface of a polypropylene sheet by a bar coater and dried, to obtain a catalyst layer. The application amount of the catalyst layer was controlled so that the platinum content was 0.2 mg per 1 $cm^2$.

An ion exchange membrane (Gore Select manufactured by Japan Goretex K.K., membrane thickness: 30 μm) was sandwiched by two of the above-mentioned polypropylene sheet with catalyst layer so that the catalyst layers faced inside, and the obtained laminate was hot-pressed at 130°C for 10 minutes. Then, the polypropylene sheets were removed, and an MEA was obtained by sandwiching with carbon papers (TGP-H-120 manufactured by Toray

Industries, Inc., membrane thickness: 360 μm). The obtained MEA had a structure as shown in Fig. 1.

Using the above-mentioned MEA, a cell for measuring fuel cell property (unit cell P) was manufactured and subjected to tests. The structure view of the unit cell is shown in Fig. 2.

The temperature of the unit cell was set at 75°C, and a hydrogen gas humidified to have a dew point of 80°C was fed at a utilization of 80% to a fuel electrode, and air humidified to have a dew point of 60°C was fed at a utilization of 40% to an air electrode, and a discharge test was conducted. Fig. 19 shows a current-voltage (I-V) curve of the unit cell P. In Table 4, current and voltage at 800 $mA/cm^2$ were shown.

Though Ketjen EC was used as the electroconductive carbon particle in the above, when Black-pearls 2000 (manufactured by Cabot, specific surface area: 1500 $m^2/g$) was used instead, the specific surface area of platinum became 250 $m^2/g$ per weight of platinum, obtaining the same result in the current-voltage (I-V) curve. When Acethylene Black (manufactured by Denki Kagaku Kogyo K.K., specific surface area: 58 $m^2/g$) was used, the specific surface area of platinum was 50 $m^2/g$ per weight of platinum, obtaining approximately the same result though a tendency of slight decrease of the current-voltage (I-V) curve was observed.

Next, 100 g of electroconductive carbon particles (Ketjen EC manufactured by Lion Corp., specific surface area: 800 $m^2/g$) was added into an aqueous solution of nitric acid, and the same surface modification as described above was conducted.

To the electroconductive carbon particles were added 1500 ml of ethanol, 150 ml of water and 60 ml of 25% ammonia water and these were stirred, and 40 ml of 3-aminopropyltriethoxysilane (manufactured by Shin-Etsu Chemical Co., Ltd.) was dropped, and heated while stirring, refluxed and reacted for 2 hours. Then, centrifugal separation and washing with water were repeated, to obtain electroconductive carbon particles of which outer side was more strongly modified.

Next, 13.2 g of a 15.2 wt% aqueous solution of chloroplatinic acid was dissolved in 300 ml of water. To this was added 28.13 g of sodium hydrogen sulfite and the mixture was stirred. Further, 1400 ml of water was added and the mixture was stirred, and 60 ml of a 5% aqueous solution of sodium hydroxide was added to control pH to 5. Then, 240 ml of 30% hydrogen peroxide was added dropwise, further, 150 ml of an aqueous solution of sodium hydroxide was added to maintain pH at 5. Then, 15.0 g of a 10 wt% aqueous solution of ruthenium chloride was added dropwise, and the mixture was stirred. To this solution was added a mixture obtained by mixing 2.34 g of electroconductive carbon particles obtained via the above-mentioned modification process and 300 ml of water and stirring them, the obtained mixture was heated while stirring by an ultrasonic homogenizer and boiled for 1 hour, to allow platinum-ruthenium alloy particles to be carried on the surfaces of the electroconductive carbon particles. Then, filtration and washing with water were repeated, the allow the electroconductive carbon particles to carry the catalyst, obtaining catalyst carrying particles. The amount of carried of platinum-ruthenium alloy was calculated to about 50 wt% from the weight of the residue obtained when the catalyst carrying particles were heated at 800°C in the air to burn carbon. The specific surface area of noble metals by an apparatus for adsorbing carbon monoxide (manufactured by Okura Rika K.K.) was 160 $m^2/g$ per noble metal weight.

Using this catalyst carrying particles, MEA was produced of the same constitution as described above. Using the above-mentioned MEA, a cell for measuring fuel cell property (unit cell Q) was subjected to a manufacturing test and the same discharge test as described above was conducted. Fig. 19 shows a current-voltage curve of the unit cell Q. The cell voltage at 800 $mA/cm^2$ was shown in Table 4. The property when methanol was used as a fuel was also evaluated. A 2 mol/l aqueous solution of methanol was fed at a temperature of 60°C as a fuel to a fuel electrode, the temperature of the unit cell was set at 75°C, air humidified to have a dew point of 60°C was fed at a utilization of 40% to the air electrode. A discharge test was conducted under these conditions. A cell voltage of 680 mV was obtained at a current density of 200 $mA/cm^2$.

On the other hand, platinum was carried in the same manner as described above on electroconductive carbon particles (Ketjen EC, specific surface area: 800 $m^2/g$) not subjected to surface modification, to obtain catalyst carrying particles. A schematic sectional view showing this catalyst carrying particle schematically is shown in Fig. 20. Catalyst particles 152 were carried on also in fine pores 153 of a electroconductive carbon particle 151. The amount of platinum carried was about 50 wt%. The specific surface area of platinum by an apparatus for adsorbing carbon monoxide (manufactured by Okura Rika K.K.) was 150 $m^2/g$ per platinum weight. Using the catalyst carrying particles, MEA having the same constitution as described above was produced.

Using the above-mentioned MEA, a cell for measuring fuel cell property (unit cell R) was subjected to a manufacturing test and the same discharge test as described above was conducted. Fig. 19 shows a current-voltage curve of the unit cell R. The cell voltage at 800 $mA/cm^2$ was shown in Table 4. When methanol was used as a fuel, a cell voltage of 400 mV was obtained at a current density of 200 $mA/cm^2$.

The above descriptions teach that, though the specific surface area itself of platinum scarcely changes, the cell voltage (mV) at 800 $mA/cm^2$ is higher in the case of using electroconductive carbon particles subjected to surface modification. The reason for this is considered that platinum particles are localized on the outer surfaces of electroconductive carbon particles, acting effectively as a catalyst.

Table 4

| Voltage at 800 $mA/cm^2$(mV) | | |
|---|---|---|
| Unit cell P | Unit cell Q | Unit cell R |
| 632 | 632 | 530 |

As described above, by allowing catalyst particles to be carried only on the outer surfaces of electroconductive carbon particles, a polymer electrolyte fuel cell having lowered content of noble metals can be provided while maintaining high power generation efficiency. Further, the catalyst carrying particles of the present invention can be applied also to other fuel cells such as a direct methanol type fuel cell.

Industrial Applicability

According to the present invention, the relation between a hydrogen ion conductive polymer electrolyte and catalyst particles and carbon particles in a catalyst layer of an electrode of a fuel cell can be clarified, and a fuel cell excellent in power generation property can be provided.
Also, according to the present invention, optimum MEA capable of providing a fuel cell having an excellent power generation ability and a fuel cell power generation system showing excellent system efficiency can be provide. Particularly, the properties of a catalyst layer and a gas diffusion layer constituting MEA, and a water repellent layer capable of being formed between them, can be improved.
Further, according to the present invention, by optimizing the water repellency of a carbon fine powder in a catalyst layer and a gas diffusion layer, an electrode for fuel cell exhibiting a higher ability, a polymer electrolyte type fuel cell and liquid fuel cell obtained by using this electrode, can be provided.

## Claims

1. A fuel cell comprising a hydrogen ion conductive polymer electrolyte membrane, a pair of electrodes disposed sandwiching said hydrogen ion conductive polymer electrolyte membrane, and a pair of separator plates having gas passages feeding a fuel gas to and discharging a fuel gas from one of said electrodes and feeding an oxidant gas to and discharging an oxidant gas from another electrode, wherein

   said electrode has a gas diffusion layer and a catalyst layer in contact with said hydrogen ion conductive polymer electrolyte membrane,

   said catalyst layer comprises a hydrogen ion conductive polymer electrolyte and electroconductive carbon particles carrying catalyst particles, and

   said hydrogen ion conductive polymer electrolyte and electroconductive carbon particles in said catalyst layer satisfy the formula (1):

$$Y = a \cdot \log X - b + c$$

   where, log represents natural logarithm, X represents the specific surface area of the electroconductive carbon particles ($m^2/g$), Y=(the weight (g) of the hydrogen ion conductive polymer electrolyte)/(the weight (g) of the electroconductive carbon particles), a=0.216, c=±0.300, b=0.421 at an air electrode and b=0.221 at an fuel electrode.

2. The fuel cell in accordance with Claim 1, wherein said catalyst layer contains electroconductive carbon particles having a particle size of the primary particle of 10 nm or more and 150 nm or less, a hydrogen ion conductive polymer electrolyte and platinum, and has a thickness of 3 μm or more and 10 μm or less.

3. The fuel cell in accordance with Claim 1, wherein said electrode has a water repellent layer between said catalyst layer and said gas diffusion layer, said water repellent layer contains electroconductive carbon particles having a particle size of the primary particle of 10 nm or more and 150 nm or less and a water repellent agent, portions of said water repellent layer not intruding into said gas diffusion layer have an average thickness of 5 μm or more and 50 μm or less.

4. The fuel cell in accordance with Claim 1, wherein the average thickness of said gas diffusion layer is 250 μm or

more and 400 μm or less.

**5.** The fuel cell in accordance with any of Claims 1 to 4, wherein said catalyst layer has a porosity of 30% or more and 70% or less.

**6.** The fuel cell in accordance with any of Claims 1 to 5, wherein said water repellent layer has a porosity of 30% or more and 60% or less.

**7.** The fuel cell in accordance with any of Claims 1 to 6, wherein said fuel cell has a sealing member on the peripheral parts of said electrode, and the distance between said electrode and said sealing member is 10 μm or more and 1 mm or less.

**8.** The fuel cell in accordance with any of Claims 1 to 7, wherein said hydrogen ion conductive polymer electrolyte has a main chain skeleton comprised of fluorocarbon and a side chain having an end group comprised of sulfonic acid or alkylsulfonic acid, and has an equivalent weight of 80 g/Eq or more and 1100 g/Eq or less.

**9.** The fuel cell in accordance with any of Claims 1 to 8, wherein said electroconductive carbon particles have a specific surface area of 50 $m^2$/g or more and 1500 $m^2$/g or less.

**10.** The fuel cell in accordance with any of Claims 1 to 9, wherein said electroconductive carbon particles contain a graphitized carbon powder in an amount of 33% by weight or more.

**11.** The fuel cell in accordance with Claim 10, wherein the lattice plane spacing $d_{002}$ of the (002) plane in the crystal structure of said graphitized carbon powder is 3.35Å or more and 3.44Å or less.

**12.** The fuel cell in accordance with Claim 10 or 11, wherein said graphitized carbon powder is one obtained by thermally treating a carbon powder at 2000°C or more.

**13.** The fuel cell in accordance with any of Claims 1 to 12, wherein said electroconductive carbon particles have a specific surface area of 58 $m^2$/g or more and 1500 $m^2$/g or less, and said catalyst particles are carried only on the outside of said electroconductive carbon particles.

**14.** The fuel cell in accordance with any of Claims 1 to 13, wherein an end cation part composed of a polar functional group present on the outer surface of said electroconductive carbon particle is substituted by a catalyst cation.

**15.** The fuel cell in accordance with any of Claims 1 to 14, wherein said catalyst particles have a specific surface area of 50 $m^2$/g or more and 250 $m^2$/g or less.

FIG. 1

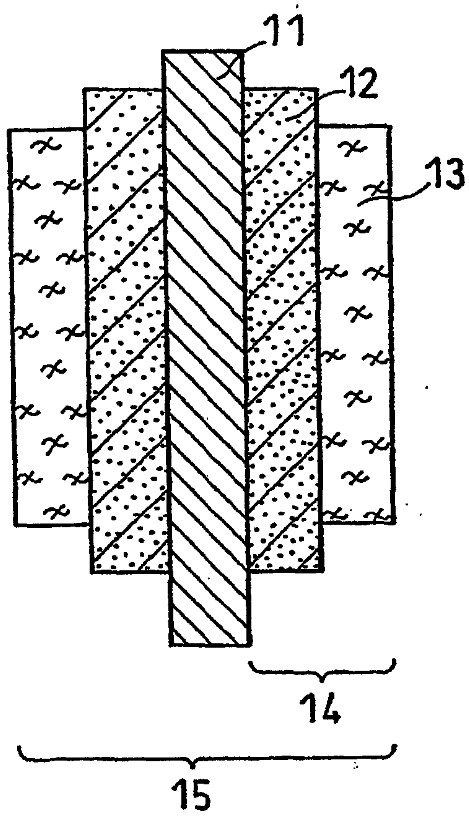


FIG. 2

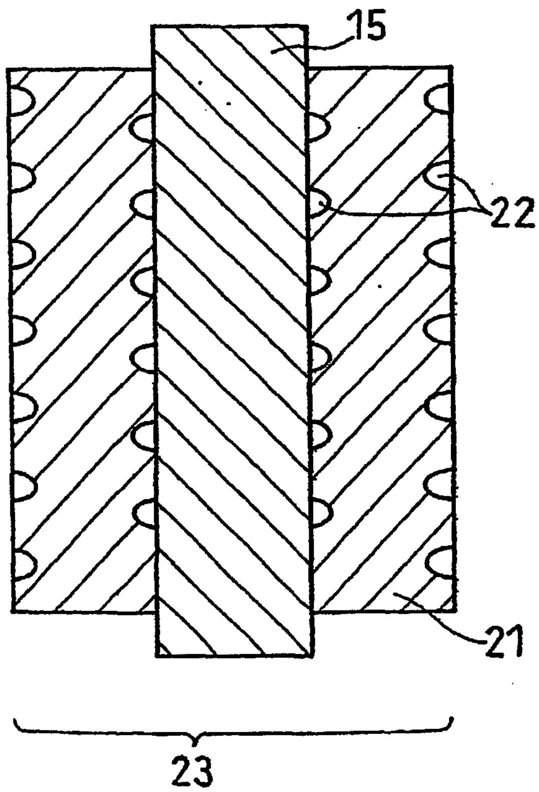

FIG. 3

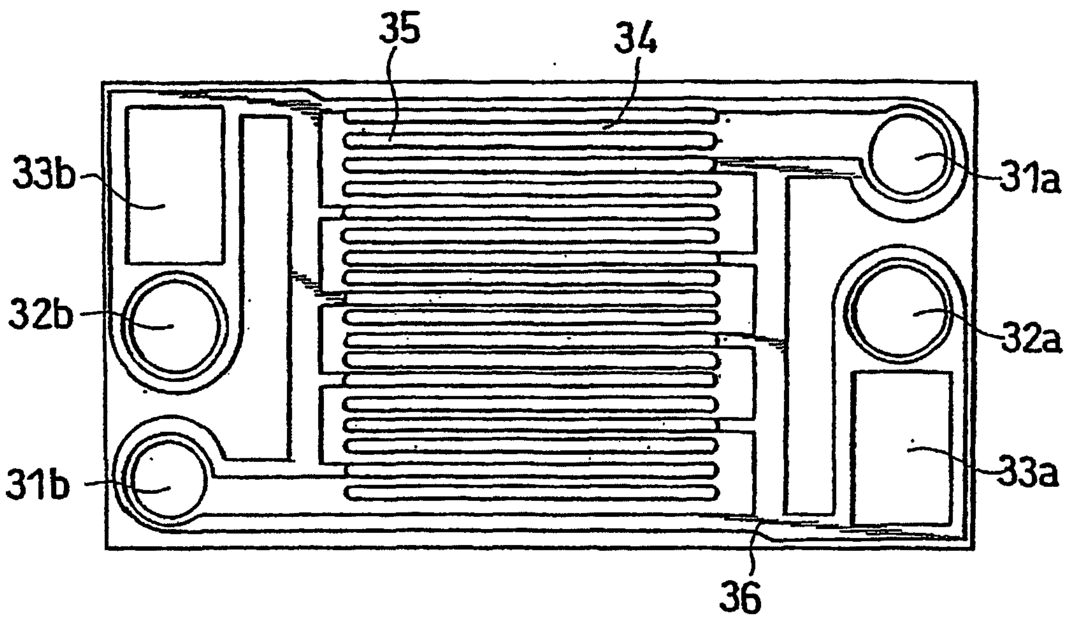


FIG. 4

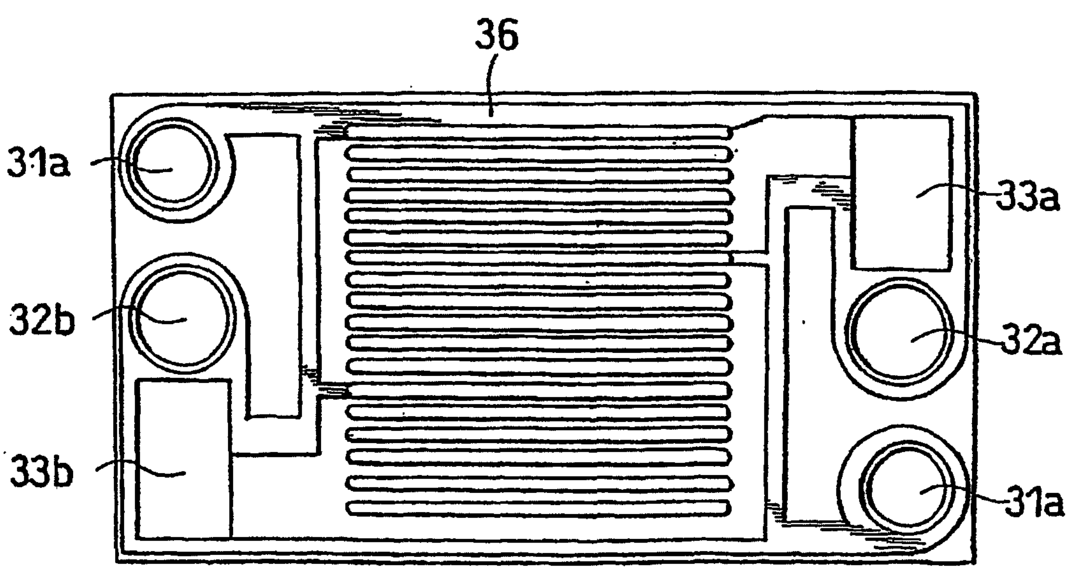

F I G. 5

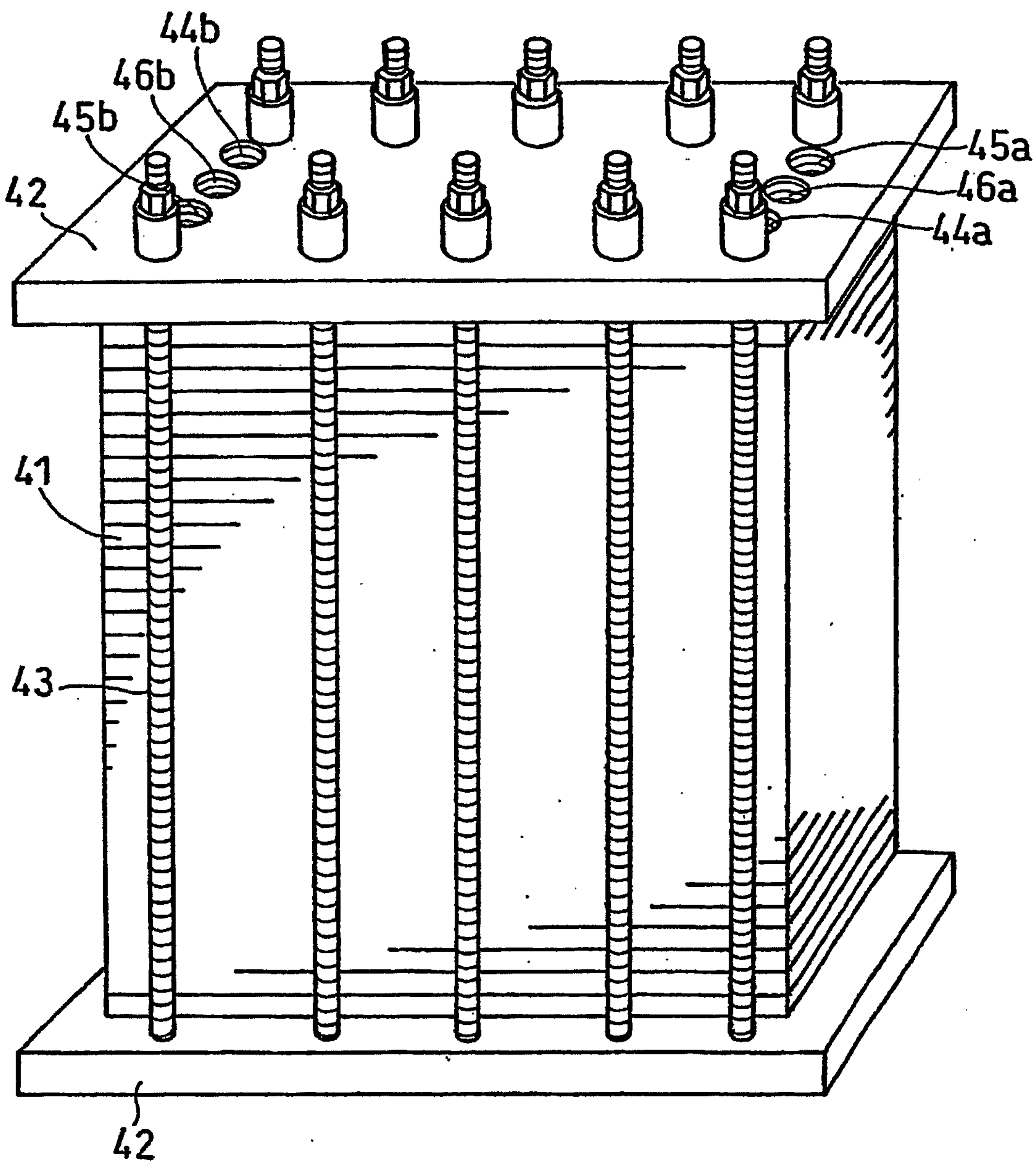

F I G. 6

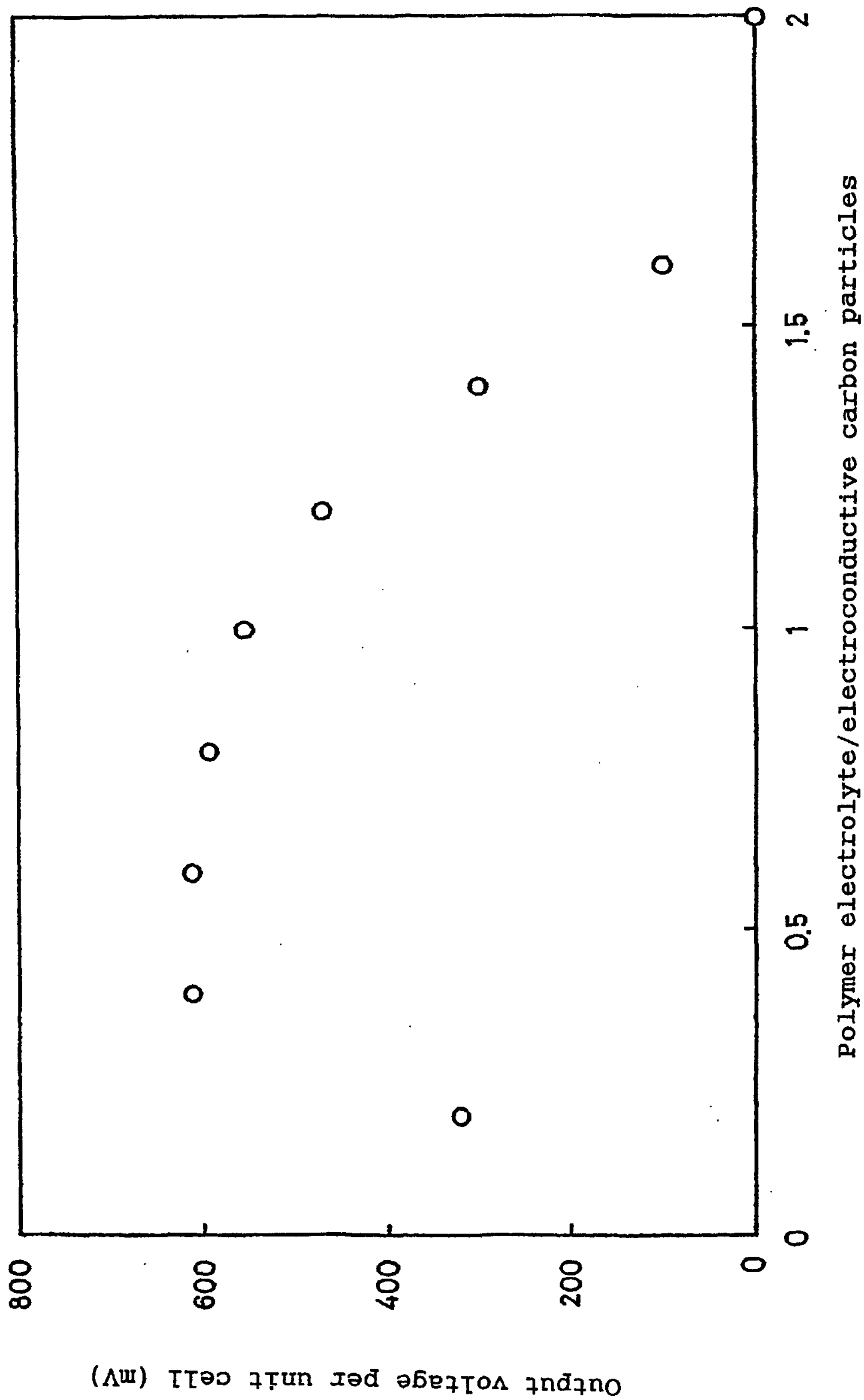
800
600
400
200
0
Output voltage per unit cell (mV)
0
0.5
1
1.5
2
Polymer electrolyte/electroconductive carbon particles

FIG. 7

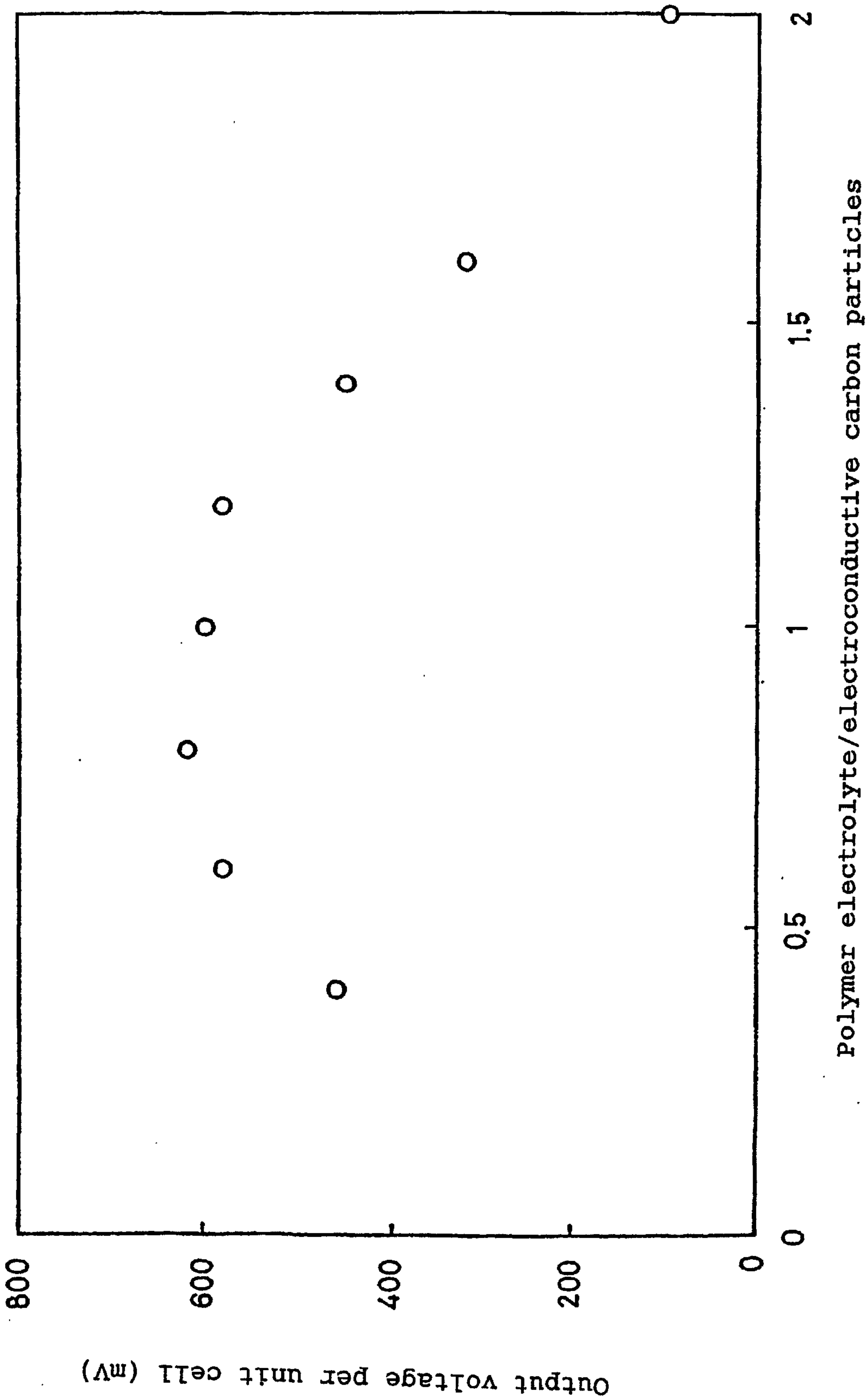
Output voltage per unit cell (mV)
800
600
400
200
0
Polymer electrolyte/electroconductive carbon particles
0
0.5
1
1.5
2

F I G. 8

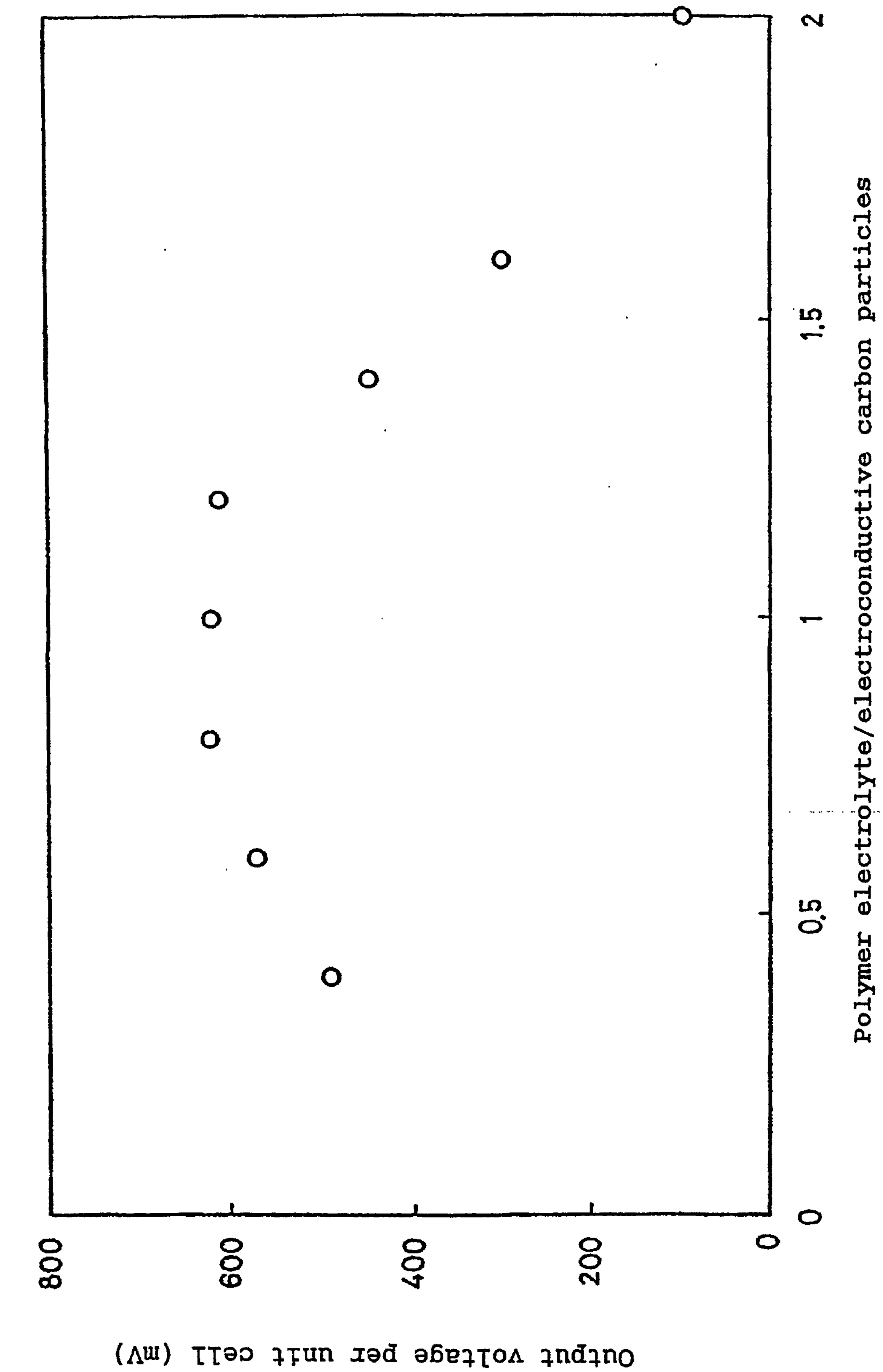

800
600
400
200
0
Output voltage per unit cell (mV)
0
0,5
1
1,5
2
Polymer electrolyte/electroconductive carbon particles

FIG. 9

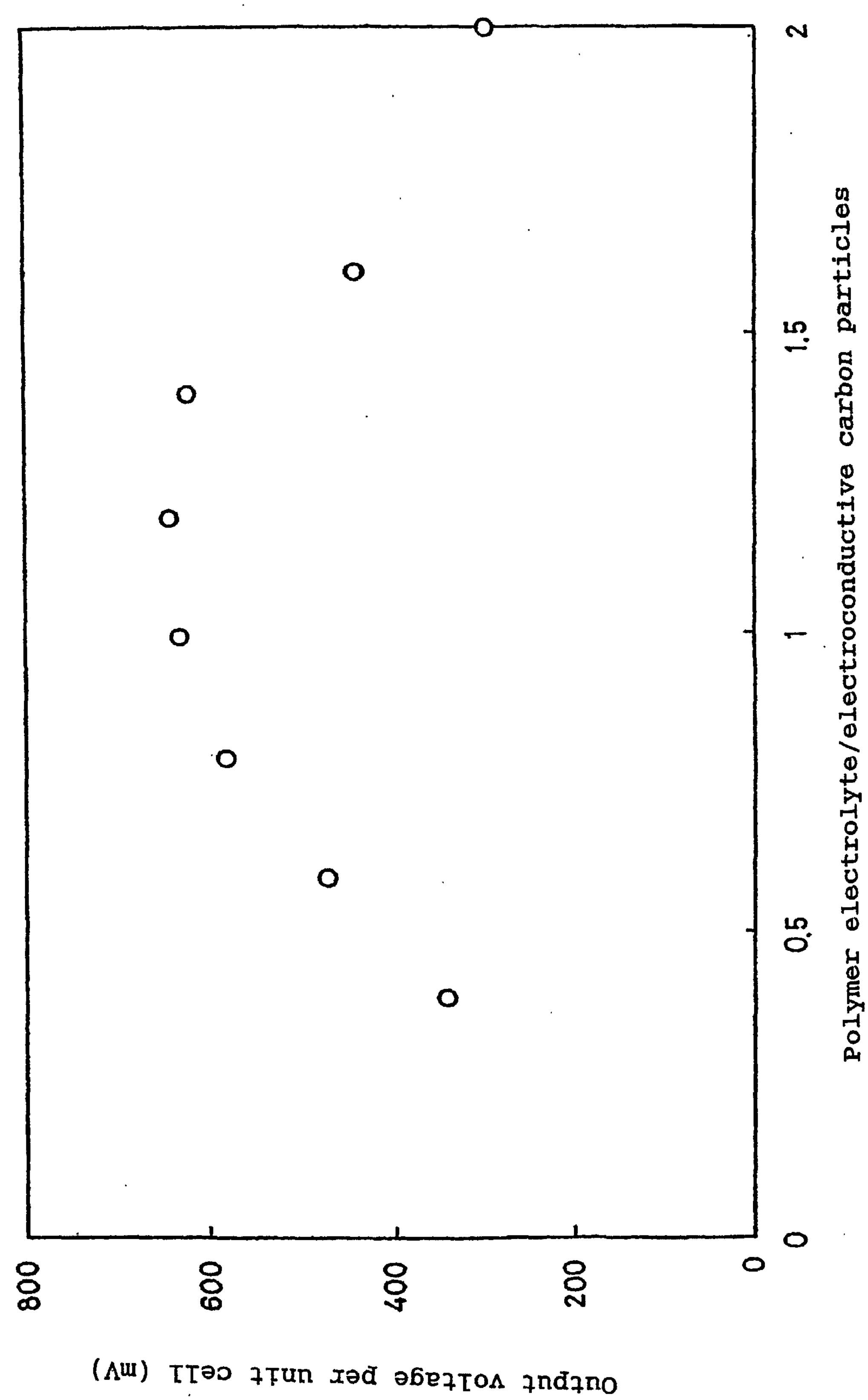
Output voltage per unit cell (mV)
800
600
400
200
0
0
0.5
1
1.5
2
Polymer electrolyte/electroconductive carbon particles

FIG. 10

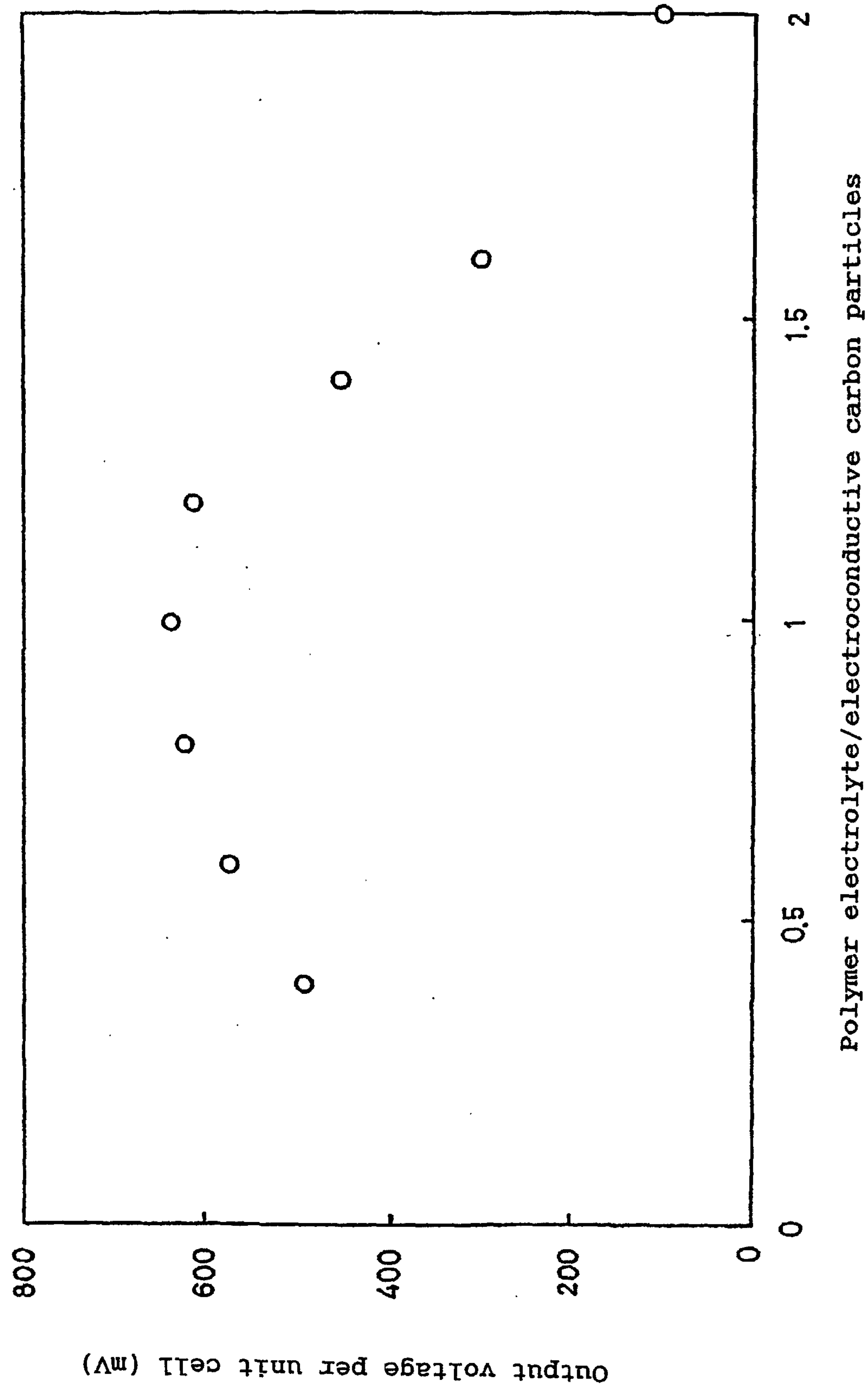
Output voltage per unit cell (mV)
800
600
400
200
0
Polymer electrolyte/electroconductive carbon particles
0
0.5
1
1.5
2

FIG. 11

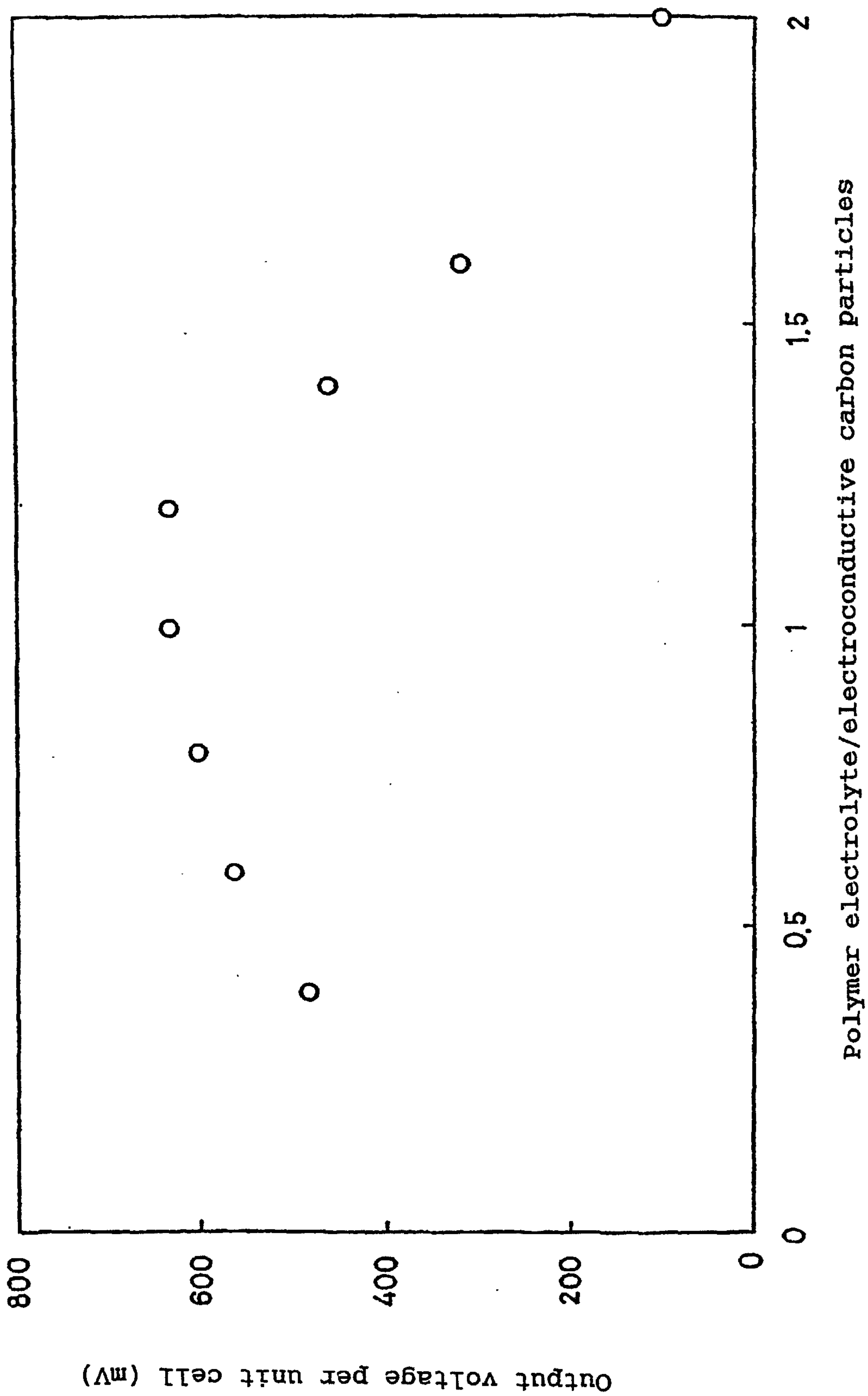
Output voltage per unit cell (mV)
800
600
400
200
0
Polymer electrolyte/electroconductive carbon particles
0
0.5
1
1.5
2

F I G. 1 2

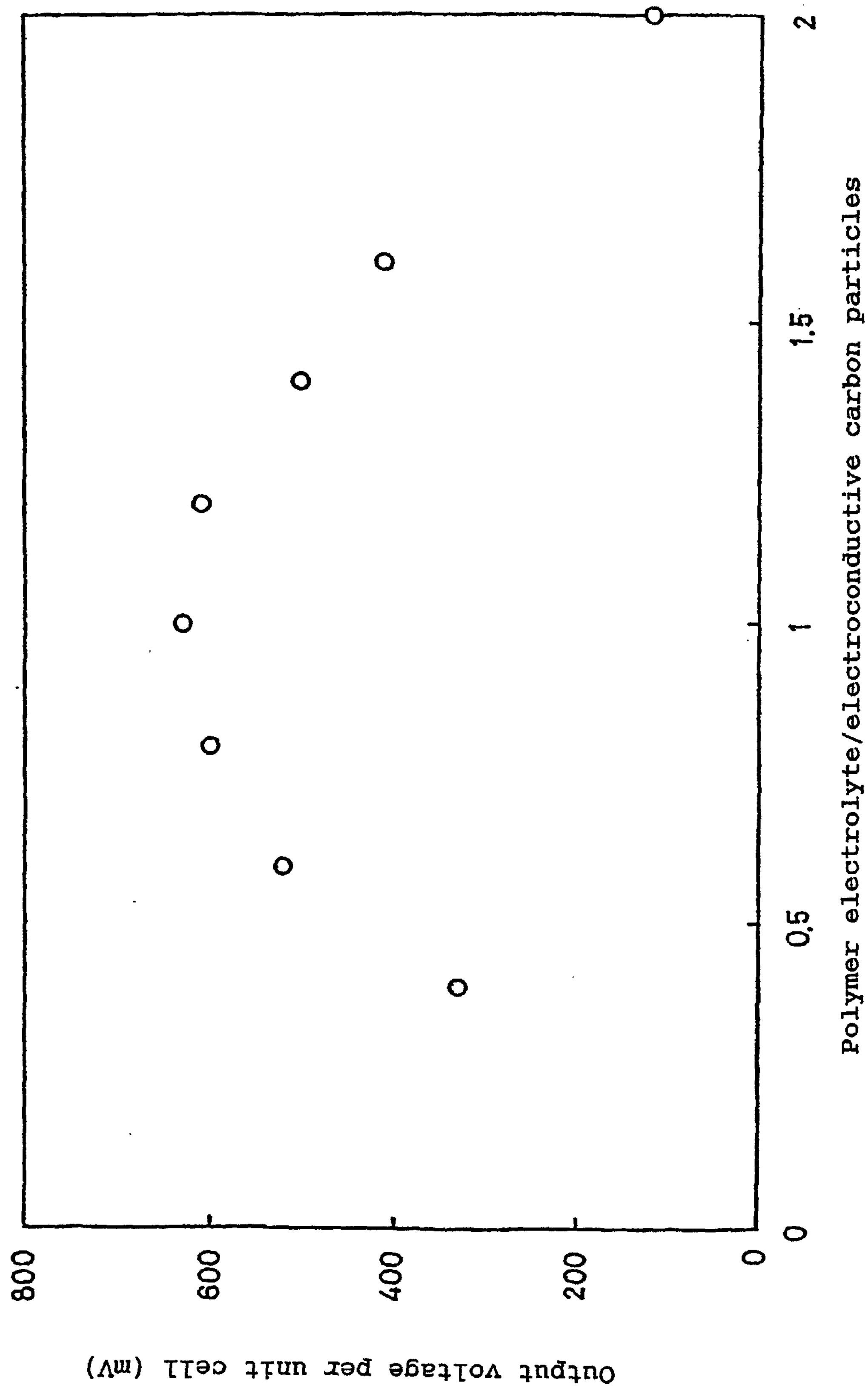
800
600
400
200
0
Output voltage per unit cell (mV)
0
0,5
1
1,5
2
Polymer electrolyte/electroconductive carbon particles

FIG. 13

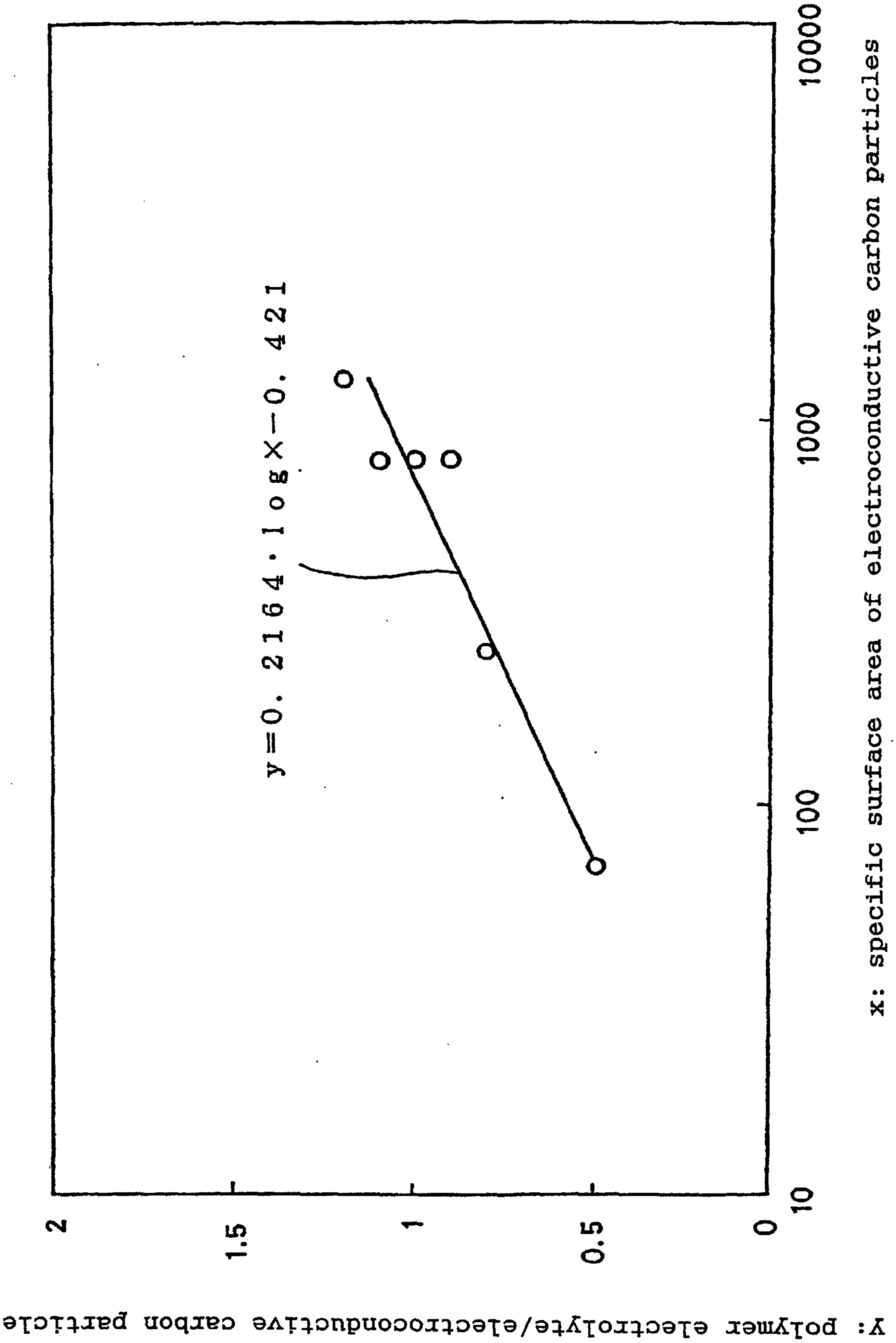
y=0. 2164·logX−0. 421
2
1.5
1
0.5
0
10
100
1000
10000
x: specific surface area of electroconductive carbon particles
Y: polymer electrolyte/electroconductive carbon particles

F I G. 1 4

(a) Graphitized carbon particle

(b) Usual carbon particle

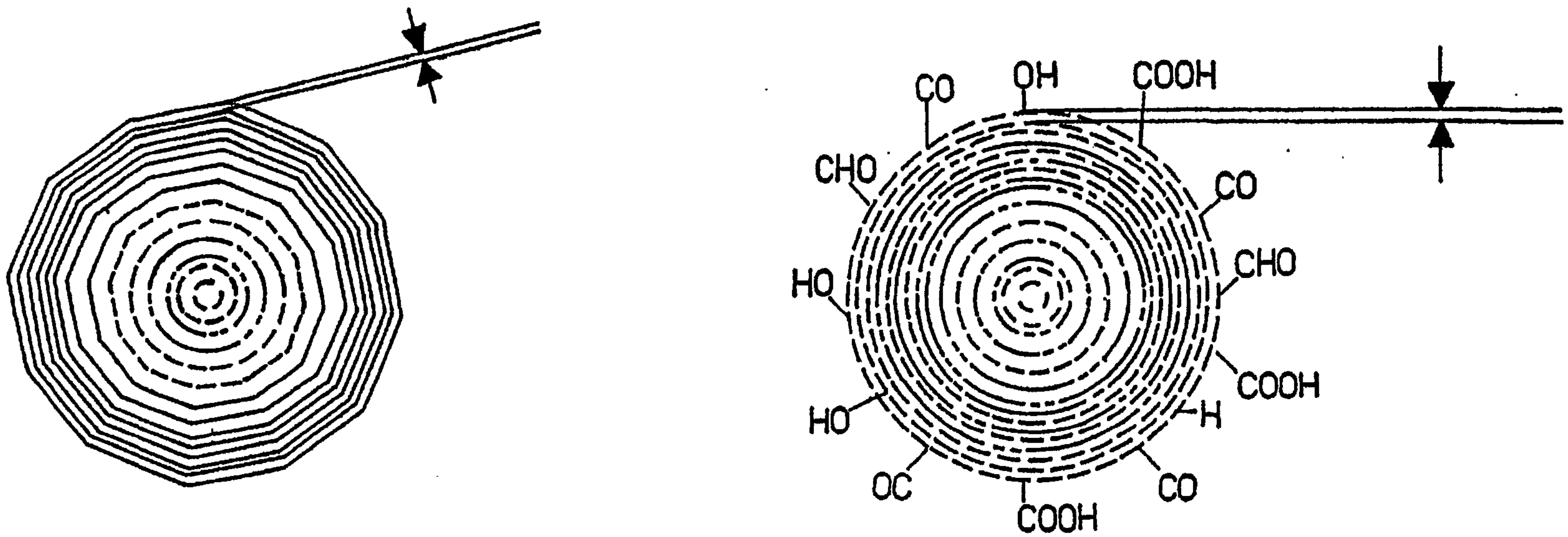

FIG. 15

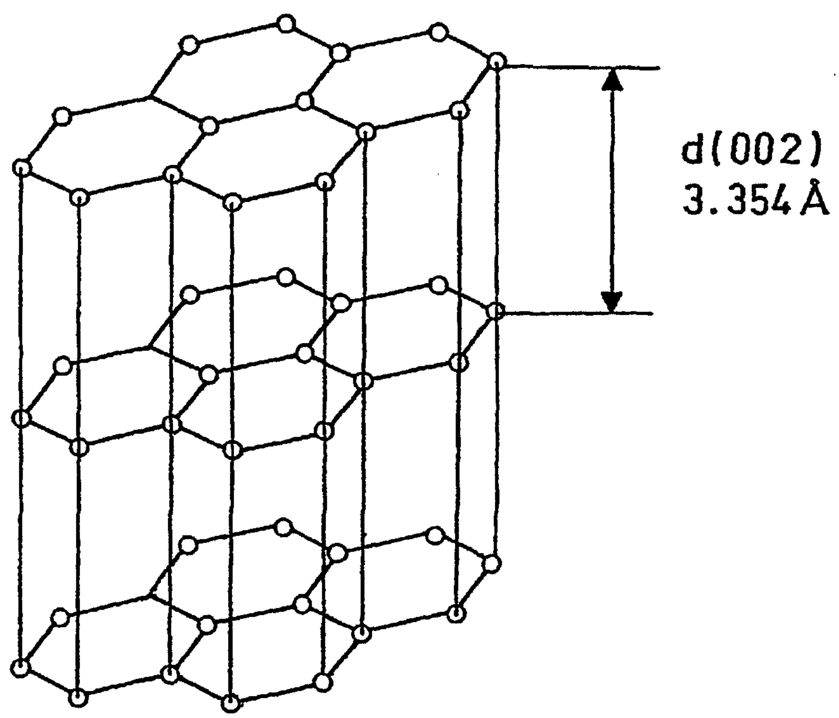

FIG. 16

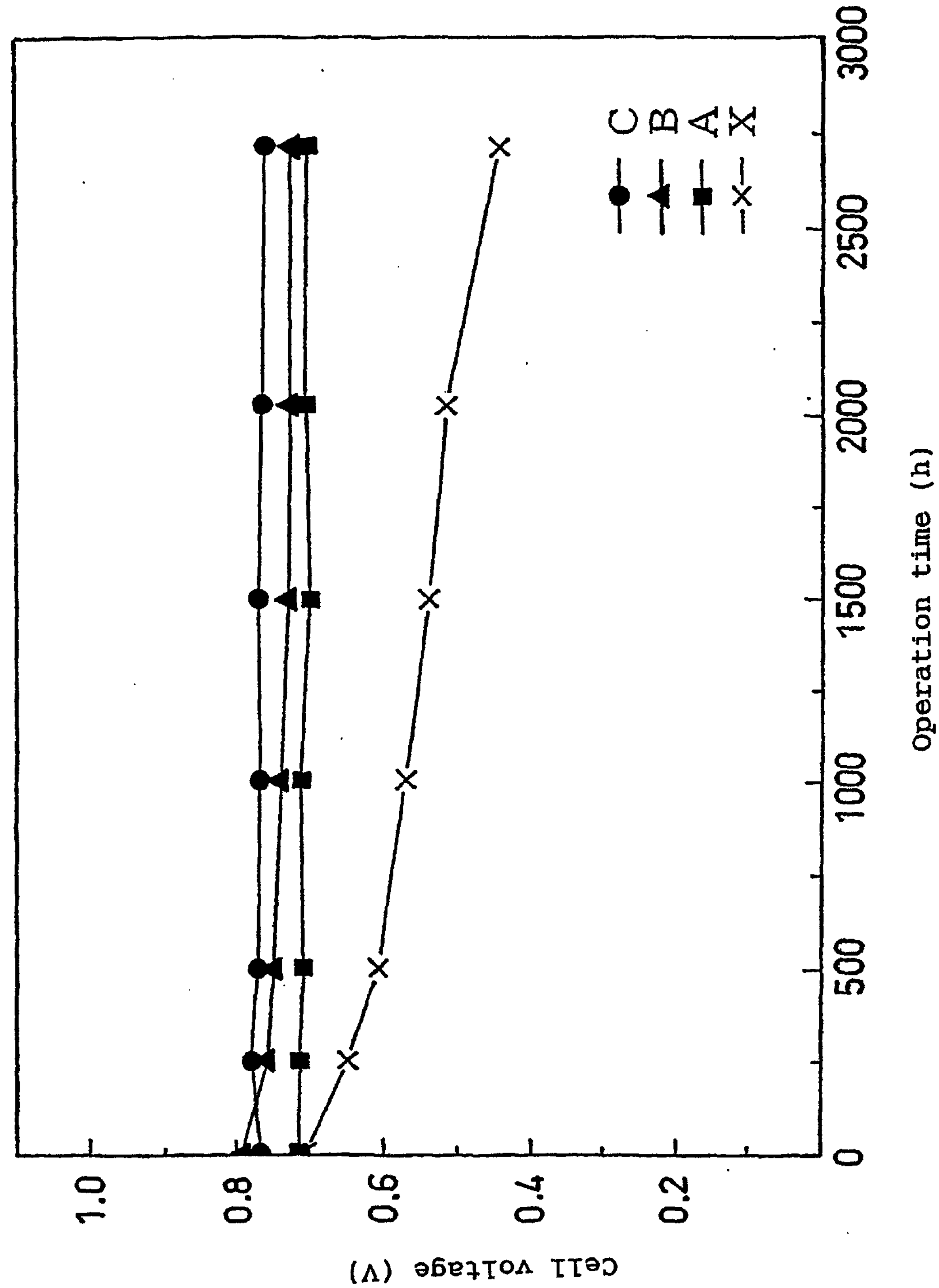
Cell voltage (V)
1.0
0.8
0.6
0.4
0.2
Operation time (h)
0
500
1000
1500
2000
2500
3000
C
B
A
X

FIG. 17

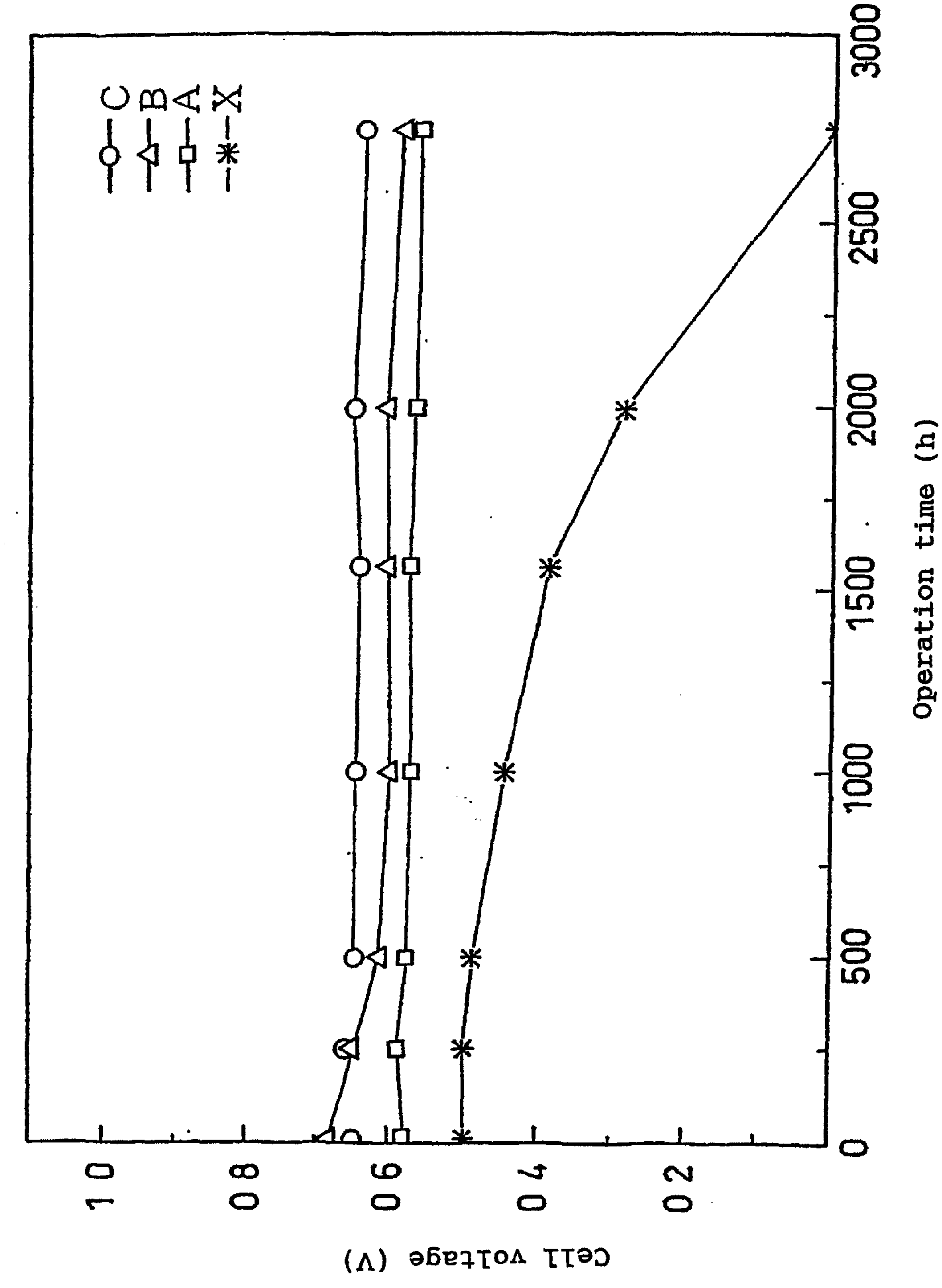

Cell voltage (V)
1.0
0.8
0.6
0.4
0.2
0
500
1000
1500
2000
2500
3000
Operation time (h)
C
B
A
X

FIG. 18

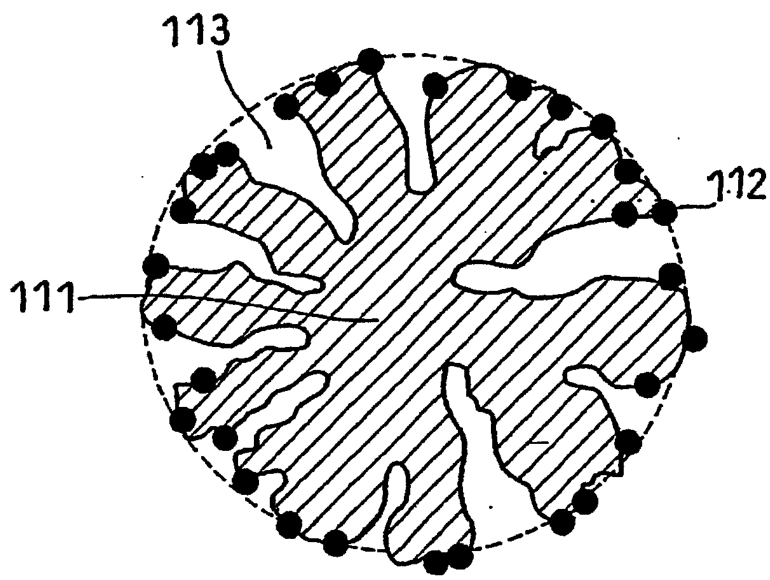

FIG. 19

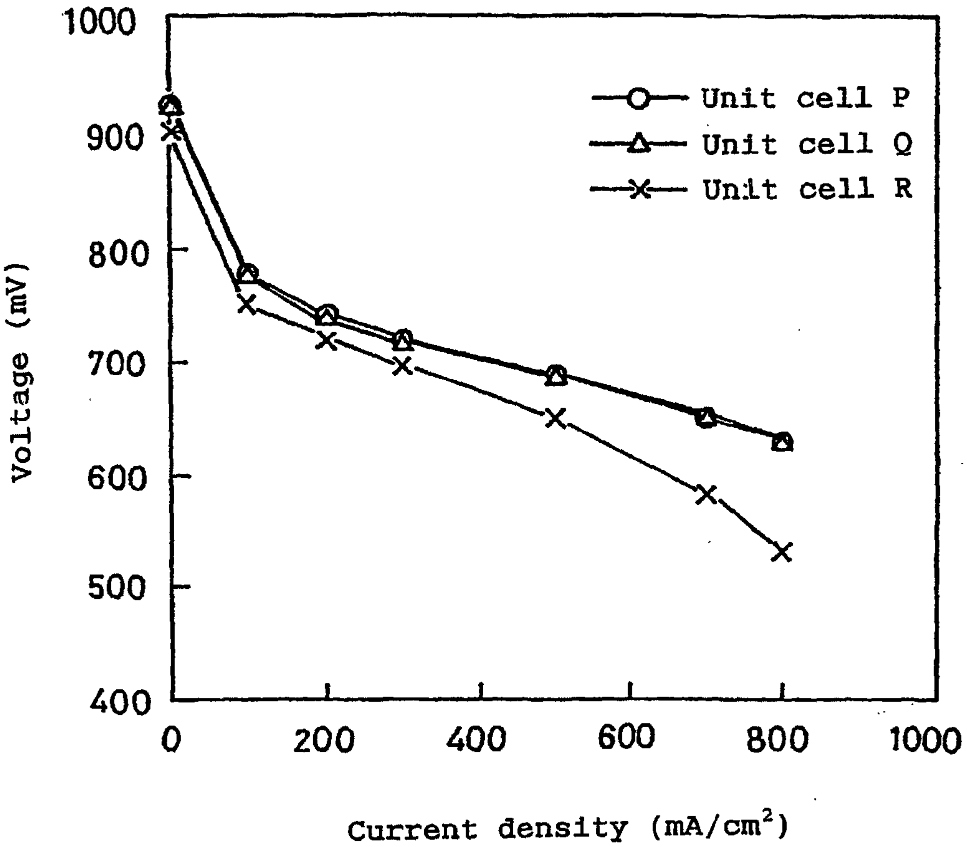
1000
900
800
700
600
500
400
Voltage (mV)
0
200
400
600
800
1000
Current density (mA/cm$^2$)
Unit cell P
Unit cell Q
Unit cell R

FIG. 20

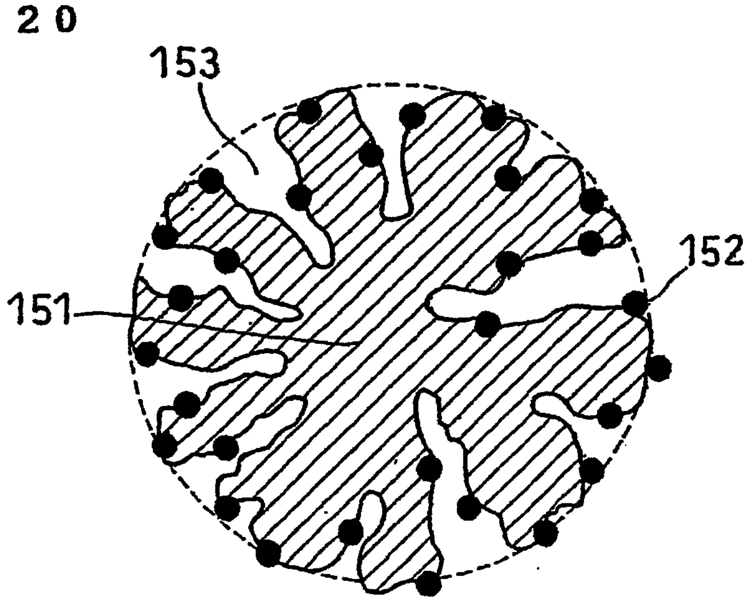
153
152
151

## INTERNATIONAL SEARCH REPORT

International application No.
PCT/JP01/06952

A. CLASSIFICATION OF SUBJECT MATTER
Int.Cl[7] H01M4/86, H01M8/02, H01M8/10

According to International Patent Classification (IPC) or to both national classification and IPC

B. FIELDS SEARCHED

Minimum documentation searched (classification system followed by classification symbols)
Int.Cl[7] H01M4/86, H01M8/02, H01M8/10

Documentation searched other than minimum documentation to the extent that such documents are included in the fields searched
Jitsuyo Shinan Koho 1922-1996 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X<br>Y | JP 6-295729 A (Asahi Chemical Industry Co., Ltd.),<br>21 October, 1994 (21.10.94),<br>Claims; Par. No. [0015] (Family: none) | 1<br>1-15 |
| Y | EP 987777 A1 (Degussa-Hüls Aktiengesellschaft),<br>22 March, 2000 (22.03.00),<br>Par. Nos. [0043], [0044], [0049]; Patentansprüche<br>& JP 2000-67873 A<br>Claims; Par. Nos. [0043], [0044], [0049]<br>& BR 9903868 A & US 6156449 A<br>& DE 19837669 A | 1-15 |
| Y | JP 8-88007 A (Matsushita Electric Ind. Co., Ltd.),<br>02 April, 1996 (02.04.96),<br>Claims (Family: none) | 2,3,5-15 |
| Y | JP 9-245801 A (Tanaka Kikinzoku Kogyo K.K.),<br>19 September, 1997 (19.09.97),<br>Claims; Par. Nos. [0009] to [0011]; Fig. 1 (Family: none) | 3,5-15 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 August, 2001 (31.08.01) | 11 September, 2001 (11.09.01) |
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

International application No.
PCT/JP01/06952

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-265992 A (Mazda Motor Corporation), 07 October, 1997 (07.10.97), Claims; Par. Nos. [0012] to [0013]; Fig. 2 (Family: none) | 3-15 |
| Y | EP 797265 A2 (Degussa Aktiengesellschaft), 24 September, 1997 (24.09.97), Beispiel 1; Patentansprüche & JP 10-3929 A Claims; Par. No. [0068] & US 5861222 A & DE 19611510 A | 5-15 |
| Y | JP 9-199145 A (Toyota Motor Corporation), 31 July, 1997 (31.07.97), Claims; Fig. 2 (Family: none) | 7-15 |
| Y | JP 8-37012 A (Fuji Electric Co., Ltd.), 06 February, 1996 (06.02.96), Claims; Fig. 1 (Family: none) | 7-15 |
| Y | JP 6-236762 A (Asahi Chemical Industry Co., Ltd.), 23 August, 1994 (23.08.94), Claims; Par. No. [0027] (Family: none) | 8-15 |
| Y | JP 2000-188110 A (Asahi Glass Co., Ltd.), 04 July, 2000 (04.07.00), Claims; Par. No. [0021] (Family: none) | 8-15 |
| Y | JP 11-204119 A (E.I. du Pont de Nemours and Company), 30 July, 1999 (30.07.99), Claims; Par. No. [0015] (Family: none) | 8-15 |
| Y | EP 952241 A1 (N.E. Chemcat Corporation), 27 October, 1999 (27.10.99), Par. Nos. [0025] to [0028]; Claims & JP 2000-12043 A Claims; Par. Nos. [0012] to [0013] | 9-15 |
| Y | JP 11-185771 A (Osaka Gas Co., Ltd.), 09 July, 1999 (09.07.99), Claims; Par. No. [0038] (Family: none) | 12-15 |
| Y | JP 8-162133 A (Agency of Industrial Science and Technology), 21 June, 1996 (21.06.96), Claims; Par. No. [0020] (Family: none) | 13-15 |
| Y | JP 10-302806 A (Permelec Electrode Ltd.), 13 November, 1998 (13.11.98), Claims; Par. No. [0018] (Family: none) | 15 |
| Y | US 5866423 A (Matsushita Electric Industrial Co., Ltd.), 02 February, 1999 (02.02.99), table 1; Claims & JP 9-257687 A Claims; Par. No. [0040] & CA 2195281 A & DE 19701174 A | 15 |

Form PCT/ISA/210 (continuation of second sheet) (July 1992)